# EUROPEAN PATENT SPECIFICATION

(11) **EP 2 620 254 B1**
(45) Date of publication and mention of the grant of the patent: **13.08.2014**
(21) Application number: 12189813.4
(22) Date of filing: 24.10.2012
(51) Int. Cl.: B23Q 3/155

(54) **Machine tool**
Maschinenwerkzeug
Machine-outil

(30) Priority: 30.01.2012 JP 2012017097; 30.05.2012 JP 2012123520
(43) Date of publication of application: 31.07.2013
(73) Proprietor: Brother Kogyo Kabushiki Kaisha, Nagoya-shi, Aichi 467-8561 (JP)
(72) Inventor: Ito, Keishi, Nagoya-shi, Aichi 467-8562 (JP); Tsuji, Shunsuke, Nagoya-shi, Aichi 467-8562 (JP); Hayashi, Shozo, Nagoya-shi, Aichi 467-8562 (JP)
(74) Representative: Prüfer & Partner GbR European Patent Attorneys

(56) References cited:
- FR-A1- 2 547 230
- US-A- 3 633 764

## Description

### Technical Field

The present invention relates to a machine tool in which a tool mounted in a spindle is exchanged with a tool conveyed by a conveying section, according to the preamble of appended claim 1. Such a machine is known from patent document FR- 2 547 230.

### Background Art

A machine tool performs various kinds of machining and is equipped with a tool magazine for storing a plurality of tools. The tool magazine can position a predetermined tool selected from among the plurality of tools at a predetermined position. The machine tool positions the predetermined tool at the predetermined position using the tool magazine on the basis of commands from the control section thereof, exchanges the tool with the tool mounted in the spindle, and performs predetermined machining.

Japanese Patent Application Laid-Open Publication No. Hei 11-48076 discloses a tool storage apparatus (tool magazine) and a machine tool equipped with the tool storage apparatus. The tool storage apparatus has a chain and sprockets, and a plurality of tool pots for accommodating tools are connected to the chain. The sprockets are connected to a drive source, such as a motor, the drive source is driven, and a desired tool pot (tool) is conveyed to the tool exchange position in which tool exchange is performed.

The chain is formed of a plurality of components connected to each other. The dimensional tolerance of each component accumulates as the component is away from the position engaged with the sprocket. The machine tool calculates the rotation speed of the sprockets beforehand. The sprockets rotate at the calculated rotation speed and convey the respective tools to the tool exchange position.

The position of the tool is not aligned with the position of the machining section of the machine tool in some cases due to accumulated dimensional error. In the case described above, when tool exchange is carried out, the tool cannot be mounted into the spindle or the tool is mounted in a state in which the axial center of the spindle is not aligned with the axial center of the tool. If work is machined in the state in which the axial center of the spindle is not aligned with the axial center of the tool, the tool may be broken during work machining.

### Summary of the Invention

The present invention is intended to align the position of the tool with the position of the spindle at the exchange position away from the drive source.

A machine tool according to technical idea 1 is equipped with a plurality of grip arms that grip tools and rotate around shafts; a conveying section for conveying the grip arms to an exchange position in which tool exchange is performed; and a machining section, in which the tool gripped by the grip arm is mounted, for machining work, wherein the machining section moves between a machining position in which work is machined and a conveying position in which the grip arm can be conveyed, the machine tool being further equipped with a cam that moves in the same direction as that of the machining section in accordance with the movement of the machining section and a rotation rod that rotates around a rotation shaft, wherein the rotation rod has a cam follower making contact with the cam at one end thereof and has a positioning section for positioning the grip arm in the axial direction of the shaft at the other end thereof.

When the machining section of the machine tool moves between the machining position and the conveying position to perform tool exchange, the cam makes contact with the cam follower. A force is exerted from the cam to the cam follower, and the rotation rod rotates around the rotation shaft used as a fulcrum. The positioning section moves toward the shaft of the grip arm. When the conveying section conveys the grip arm to the exchange position, the grip arm may deviate from the exchange position in some cases. The positioning section positions the grip arm in the axial direction of the shaft, and the machine tool performs tool exchange. For this reason, the grip arm does not deviate from the exchange position in the machine tool.

The grip arm of a machine tool according to technical idea 2 has a fitting section. The positioning section of the rotation rod is fitted into the fitting section by the rotation of the rotation rod.

When a force is exerted from the cam to the cam follower, the rotation rod rotates around the rotation shaft used as a fulcrum. The positioning section of the rotation rod is fitted into the fitting section of the grip arm and positions the grip arm in the axial direction of the shaft.

The fitting section of a machine tool according to technical idea 3 has a ring-shaped section having a groove around the outer circumference thereof on the outside of the shaft, and the positioning section has a protrusion to engage with the groove.

The fitting section of a machine tool according to technical idea 4 has a ring-shaped section having a protrusion around the outer circumference thereof on the outside of the shaft, and the positioning section has a groove to be engaged by the protrusion.

In a machine tool according to technical idea 5, the dimension between a rotation center of the rotation rod and the position at which the cam follower makes contact with the cam is longer than the dimension between the rotation center of the rotation rod and the position at which the protrusion of the rotation rod makes contact with the groove.

The force exerted from the protrusion of the rotation rod to the groove becomes larger depending on the force exerted from the cam to the rotation rod.

A machine tool according to technical idea 6 is equipped with a biasing member for biasing the cam in a direction intersecting the cam face.

The biasing member biases the cam in a direction intersecting the cam face. When foreign object, such as chips, generated during machining attaches to the cam or the cam follower, if a force being equal to or more than the biasing force is exerted, the cam moves in the direction away from the cam follower. The machine tool does not stop even if foreign object attaches to the space between the cam and the cam follower.

The positioning section a machine tool according to technical idea 7 is formed of axial positioning sections opposed to both end sections of the shaft.

When a force is exerted from the cam to the cam follower, the rotation rod rotates around the rotation shaft used as a fulcrum. The axial positioning sections are opposed to both end sections of the shaft and restrict the position of the shaft in the axial direction, thereby positioning the grip arm in the axial direction.

In a machine tool according to technical idea 8, both end sections of the shaft have tapers. Inclined faces adapted to the tapers are formed on the axial positioning sections.

The inclination angle of the tapers is designed so as to be nearly equal to that of the inclined faces. When the rotation rod rotates and the axial positioning sections get close to both end sections of the shaft, the axial positioning sections make smooth contact with the shaft, whereby the positioning of the grip arm is attained smoothly.

A machine tool according to technical idea 9 is equipped with a second positioning section and a contacted section with which the second positioning section makes contact. The second positioning section is provided in the grip arm and positions the grip arm in a direction intersecting the axial direction of the shaft.

For example, when the axial direction of the shaft is the left-right direction, the second positioning section performs positioning in the front-rear direction and the up-down direction.

In a machine tool according to technical idea 10, one end section of the grip arm grips a tool. The second positioning section protrudes in one direction orthogonal to the axial direction of the shaft from the other end section of the grip arm and makes contact with the contacted section in two directions orthogonal to the axial direction of the shaft. The second positioning section positions the grip arm in the two directions.

A machine tool according to technical idea 11 is equipped with an approaching cam and a separating cam. In accordance with the movement of the machining section, the approaching cam and the separating cam move in the same direction as that of the machining section. The grip arm makes contact with the approaching cam and gets close to the machining section. When the machining section moves from the machining position to the conveying position, after the positioning of the grip arm, the grip arm makes contact with the approaching cam and grips the tool mounted in the machining section. When the machining section moves from the conveying position to the machining position, after the positioning of the grip arm, the grip arm mounts the tool in the machining section, makes contact with the separating cam and moves away from the tool.

### Description of the Drawings

FIG. 1 is a perspective view showing a machine tool according to Embodiment;
FIG. 2 is a front view showing the machine tool;
FIG. 3 is a right side view showing the machine tool;
FIG. 4 is a perspective view showing the machine tool, with the cover for covering a tool exchanging device and a rail, etc. omitted;
FIG. 5 is a fragmentary sectional view simply showing a spindle head;
FIG. 6 is a perspective view simply showing a rail section;
FIG.7 is a perspective view simply showing a tool magazine;
FIG. 8 is a perspective view simply showing a moving carriage;
FIG. 9 is a perspective view simply showing the moving carriage mounted on the rail;
FIG. 10 is a perspective view simply showing a cam mechanism, a grip arm, and a positioning mechanism;
FIG. 11 is an enlarged perspective view simply showing the cam mechanism;
FIG. 12 is a perspective view simply showing the grip arm;
FIG. 13 is an enlarged perspective view simply showing the positioning mechanism;
FIG. 14 is a right side view simply showing the grip arm located at an exchange position and gripping a tool holder;
FIG. 15 is a rear view simply showing the grip arm located at the exchange position and gripping the tool holder;
FIG. 16 is a sectional view showing a guide plate taken on line XVI-XVI of FIG. 14;
FIG. 17 is a sectional view showing an arm section taken on line XVII-XVII of FIG. 14;
FIG. 18 is a right side view simply showing the grip arm located at the exchange position and not gripping the tool holder;
FIG. 19 is a right side view simply showing the cam mechanism, the grip arm, and the positioning mechanism at the time when the spindle head starts rising;
FIG. 20 is a right side view simply showing the cam mechanism, the grip arm, and the positioning mechanism at the time when the spindle head is rising;
FIG. 21 is an enlarged front view simply showing positioning operation using the positioning mechanism;
FIG. 22 is a right side view simply showing the cam mechanism, the grip arm, and the positioning mechanism at the time when the spindle head is rising;
FIG. 23 is a right side view simply showing the cam mechanism, the grip arm, and the positioning mechanism at the time when the spindle head has reached a conveying position;
FIG. 24 is a right side view simply showing the cam mechanism, the grip arm, and the positioning mechanism at the time when the spindle head is lowering;
FIG. 25 is a right side view simply showing the cam mechanism, the grip arm, and the positioning mechanism at the time when the spindle head is lowering;
FIG. 26 is a right side view simply showing the cam mechanism, the grip arm, and the positioning mechanism at the time when the spindle head is lowering;
FIG. 27 is a right side view simply showing the cam mechanism, the grip arm, and the positioning mechanism at the time when the spindle head is lowering;
FIG. 28 is a perspective view simply showing the grip arm of a machine tool according to a changed embodiment;
FIG. 29 is an enlarged perspective view simply showing the positioning mechanism of the machine tool according to the changed embodiment;
FIG. 30 is a vertical sectional view showing the arm shaft, including the axial center thereof, of the machine tool according to the changed embodiment;
FIG. 31 is a right side view simply showing the rotation rod and the fitting section of the machine tool according to the changed embodiment;
FIG. 32 is a sectional view taken on line A-A of FIG. 31, simply showing the rotation rod and the fitting section of the machine tool according to the changed embodiment;
FIG. 33 is a right side view simply showing the cam mechanism, the grip arm, and the positioning mechanism of the machine tool according to the changed embodiment at the time when the spindle head is lowering; and
FIG. 34 is a vertical sectional view showing the arm shaft, including the axial center thereof, of the machine tool according to another changed embodiment.

### Embodiments

Machine tools according to Embodiments of the present invention will be described on the basis of the accompanying drawings. In the following descriptions, the up-down direction, the left-right direction, and the front-rear direction indicated by the arrows shown in the drawings are used.

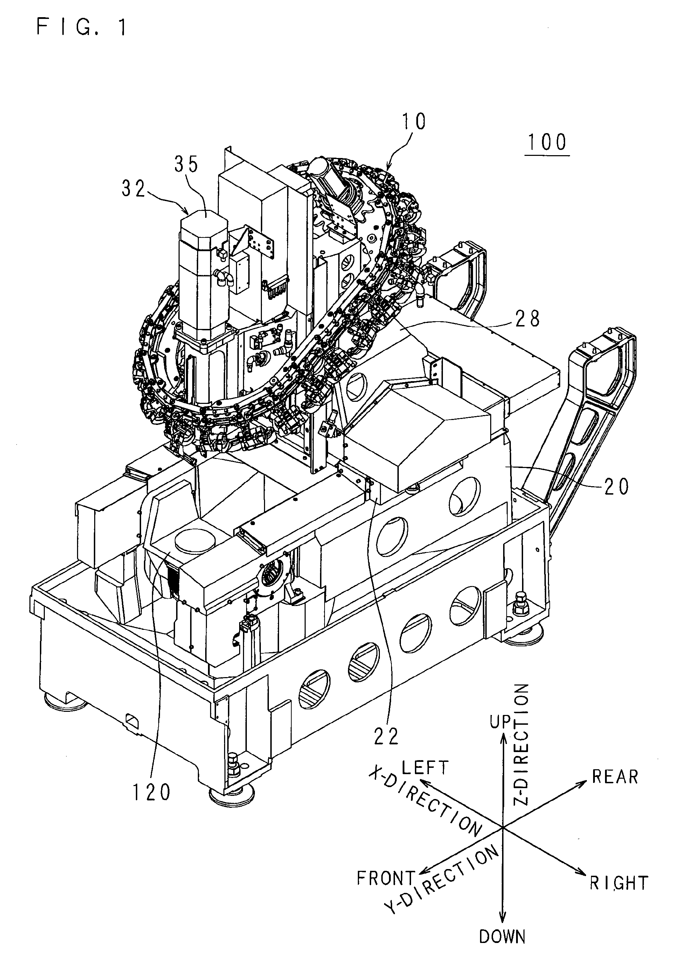

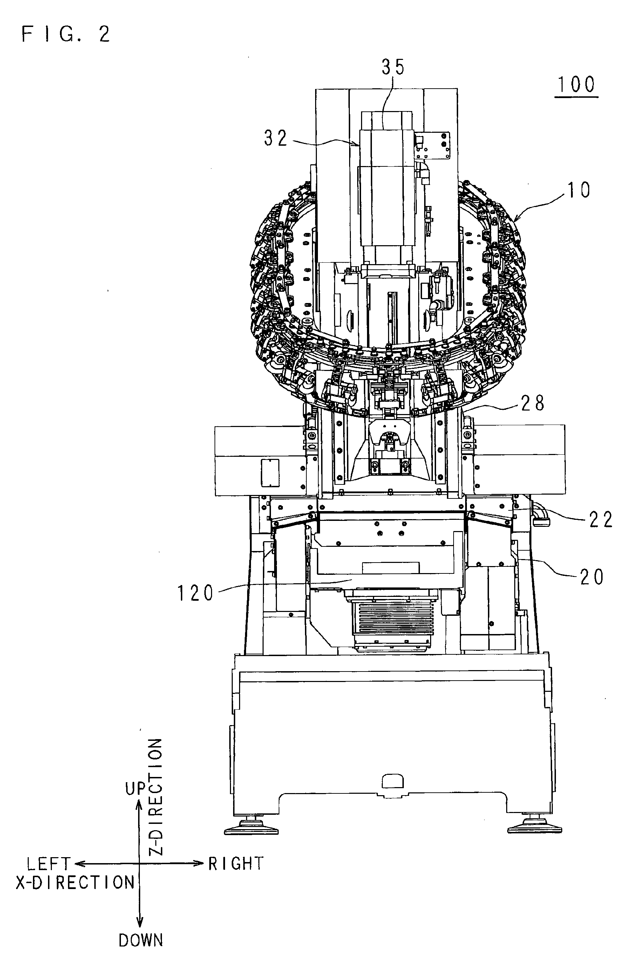

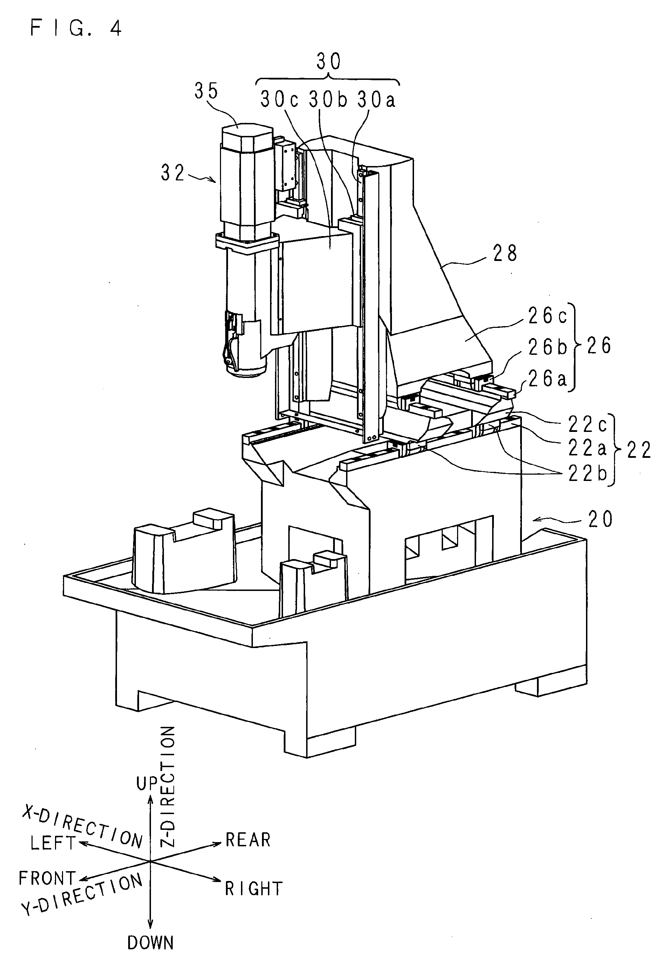

A machine tool 100 is described using FIGS. 1 to 4. The worker operates the machine tool 100 in front thereof and mounts/dismounts work.

The machine tool 100 has a base 20, a Y-direction moving device 22, an X-direction moving device 26, a column 28, a Z-direction moving device 30, a spindle head (machining section) 32, a tool exchanging device 10 (conveying section), etc. The base 20 is secured onto the face of the floor.The base 20 supports the column 28 so that the column 28 is movable in the Y-direction (the front-rear direction) and in the X-direction (the left-right direction) via the Y-direction moving device 22 and the X-direction moving device 26.The base 20 supports a work holding device 120 that is used to hold work serving as an object to be machined while driving the work around two axes. The column 28 movably supports the spindle head 32 in the Z-direction (the up-down direction) via the Z-direction moving device 30. The tool exchanging device 10 exchanges tools to be mounted in the spindle head 32. The Y-direction moving device 22 has a pair of rails 22a and 22a being parallel with each other, a plurality of blocks 22b, 22b, ..., a Y-direction moving carriage 22c, and a Y-direction drive motor (not shown). The rails 22a and 22a extend in the front-rear direction on the upper face of the base 20 with an appropriate clearance therebetween in the left-right direction. The blocks 22b, 22b, ... are fitted on the rails 22a and 22a so as to be movable in the front-rear direction. The Y-direction moving carriage 22c is secured onto the blocks 22b, 22b, ... The Y-direction moving carriage 22c is moved in the front-rear direction by the drive of the Y-direction drive motor.

The X-direction moving device 26 has a pair of rails 26a and 26a being parallel with each other, a plurality of blocks 26b, 26b, ..., a column base 26c, and an X-direction drive motor (not shown). The rails 26a and 26a extend in the left-right direction on the upper face of the Y-direction moving carriage 22c with an appropriate clearance therebetween in the front-rear direction. The blocks 26b, 26b, ... are movably fitted on the rails 26a and 26a in the left-right direction. The column base 26c is secured onto the blocks 26b, 26b, ... The column 28 is moved in the left-right direction by the drive of the X-direction drive motor.

The column 28 is secured onto the column base 26c. The column 28 is moved in the Y-direction and the X-direction by the Y-direction moving device 22 and the X-direction moving device 26.

The Z-direction moving device 30 has a pair of rails 30a and 30a being parallel with each other, a plurality of blocks 30b, 30b, ..., a spindle head base 30c, a Z-direction moving motor (not shown). The rails 30a and 30a extend in the up-down direction on the front face of the column 28 with an appropriate clearance therebetween in the left-right direction. The plurality of blocks 30b, 30b, ... are movably fitted on the rails 30a and 30a in the up-down direction. The spindle head base 30c is secured onto the front faces of the blocks 30b, 30b, ... The spindle head base 30c is moved in the up-down direction by the drive of the Z-direction drive motor.

The spindle head 32 is secured to the spindle head base 30c. The spindle head 32 is moved in the front-rear direction, the left-right direction, and the up-down direction by driving and controlling the X-direction drive motor, the Y-direction drive motor, and the Z-direction moving motor.

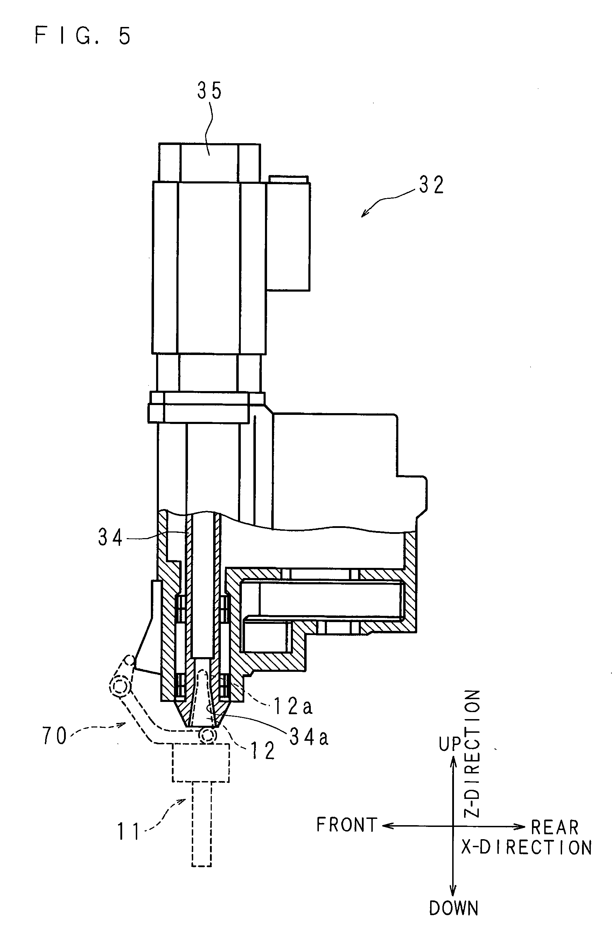

As shown in FIG. 5, the spindle head 32 rotatably holds a spindle 34 extending in the Z-direction in the inside thereof on the front side. The spindle 34 removably holds a tool holder 11 at the lower end section thereof. The tool holder 11 has a cylindrical shape, and a tool is mounted therein. The spindle 34 has a hollow cylindrical shape and has a tapered bore 34a (a tool mounting section), the inside diameter of which increases in the downward direction to the lower end section. A tapered mounting section 12 formed on the upper section of the tool holder 11 is fitted in the tapered bore 34a, whereby the tool holder 11 is mounted in the spindle 34.

Above the tapered bore 34a of the spindle 34, a draw bar (not shown) is inserted so as to be movable in the axial direction of the spindle 34. A clamp spring (not shown) is disposed around the draw bar. The clamp spring biases the draw bar upward. The lower end section of the draw bar has a grip section (not shown). When the tool holder 11 is mounted in the spindle 34, the grip section grips a pull stud 12a protruding upward from the tapered mounting section 12. Since the draw bar is biased upward, the grip section keeps gripping the pull stud 12a.

The spindle head 32 has a pressing mechanism (not shown) above the draw bar. The pressing mechanism presses the draw bar downward against the elastic force of the clamp spring. When the draw bar is pressed downward, the grip section releases the gripping of the pull stud 12a. When the grip section releases the gripping of the pull stud 12a, the tool holder 11 is dismounted from the spindle 34.

The spindle 34 is connected to a spindle motor 35 (see FIGS. 1 to 4 and FIG. 10) provided at the upper end of the spindle head 32. The spindle 34 is rotated around its axis by the drive of the spindle motor 35. The spindle 34 is rotated around its axis with the tool holder 11 mounted at the lower end thereof, and the work secured to the work holding device 120 is machined by the rotation.

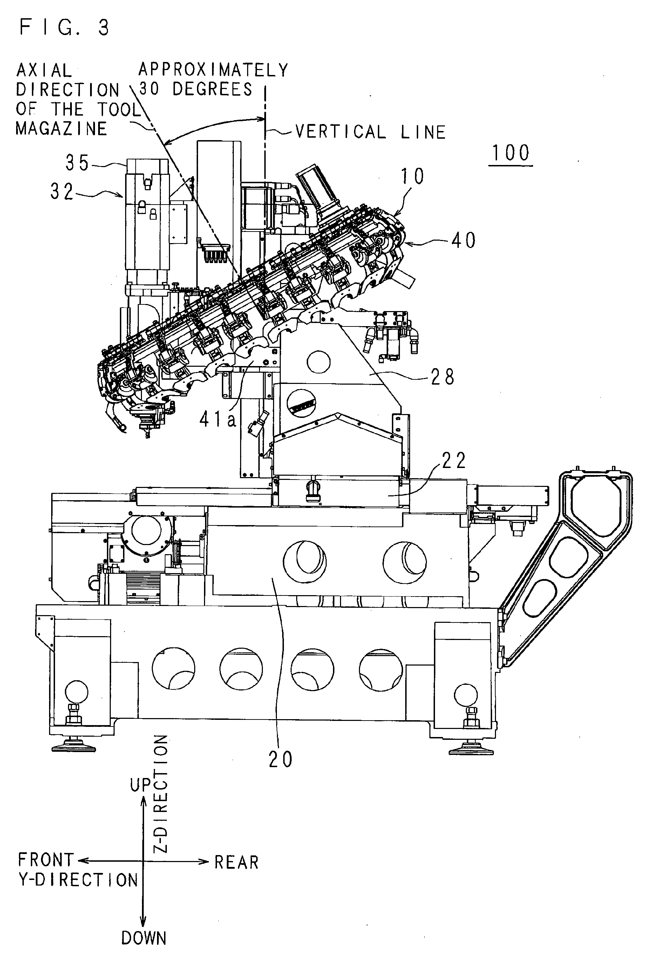

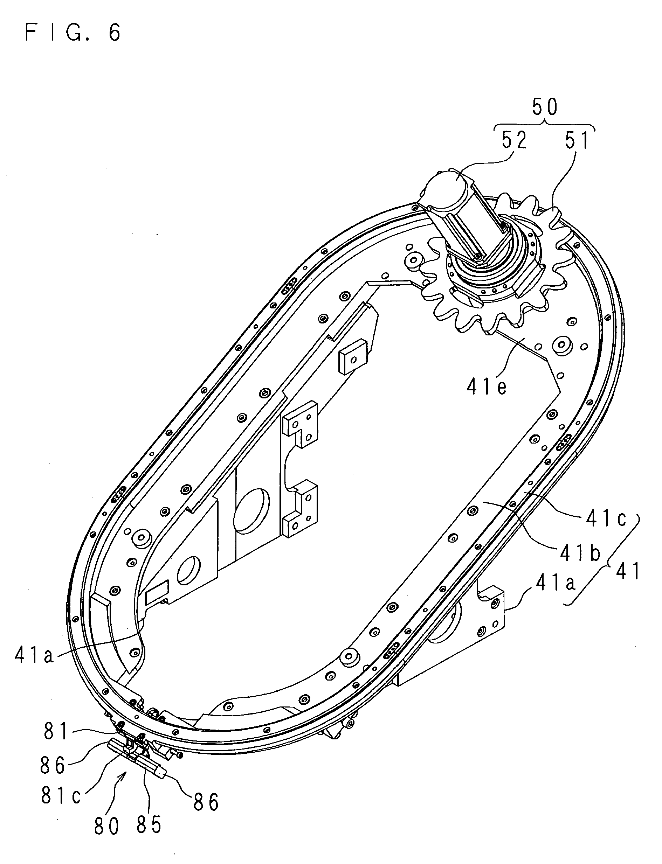

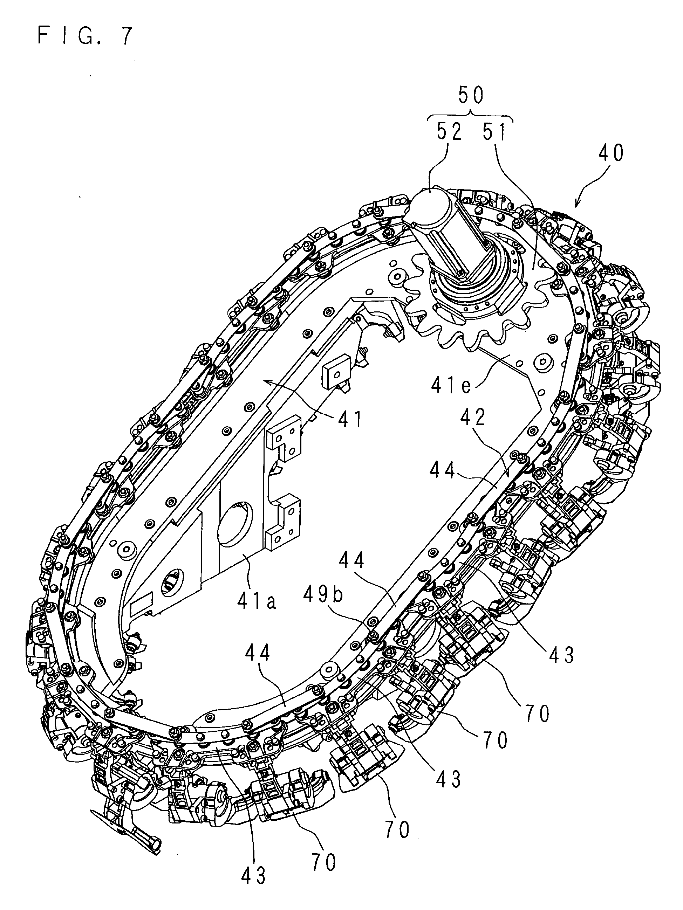

The tool exchanging device 10 has a tool magazine 40 (see FIGS. 3 and 7) and a magazine drive section 50 (see FIGS. 6 and 7). The tool exchanging device 10 conveys a plurality of tool holders 11, and each of the tool holders 11 is mounted and dismounted at the lower end section of the spindle 34.

The tool magazine 40 has a rail section 41 and a chain section 42. The rail section 41 has support beams 41a and 41a (see FIG. 3), a rail base 41b, and a rail 41c. Each of the support beams 41a and 41a is a triangular plate member, the upper side of which is an oblique side inclined downward in the forward direction. The support beams 41a and 41a are secured to the left and right sides of the column 28 in a cantilever manner. The support beams 41a and 41a extend from the portions secured to the left and right sides of the column 28 to both side portions of the spindle head 32 so as to be inclined downward in the forward direction.

The rail base 41b is an elliptic annular member and is secured to the support beams 41a and 41a so as to enclose the column 28 and the spindle head 32. The rail base 41b extends from the front lower side to the rear upper side thereof along the upper end faces of the support beams 41a and 41a while being inclined approximately 30 degrees from the horizontal plane. The semicircular portion on the rear side of the rail base 41b is provided so that a plate-shaped mounting base 41e extends from the periphery of the semicircular portion. The mounting base 41e supports the magazine drive section 50.

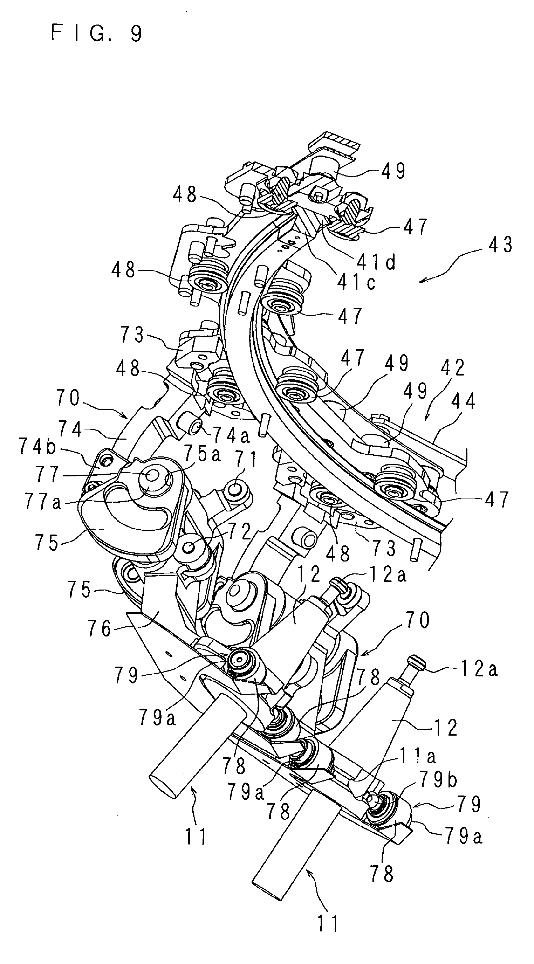

The rail 41c has a nearly rectangular shape in vertical cross section and its flat face has an elliptic endless shape, and the rail 41c is provided on the rail base 41b (see FIG. 6). As shown in FIG. 9, the rail 41c has elliptic flange-shaped fitting sections 41d and 41d formed respectively on the inner circumferential side face thereof and the outer circumferential side face thereof.The fitting sections 41d and 41d are fitted in the V-grooves of inner rollers 47 and outer rollers 48.

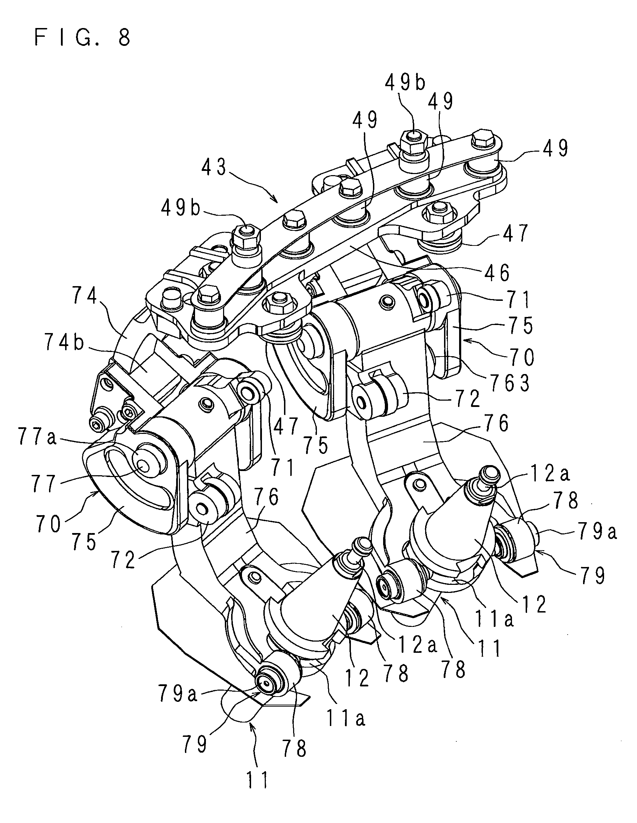

As shown in FIGS. 7 and 9, the chain section 42 has a plurality of moving carriages 43, 43, ..., a plurality of link members 44, 44, ..., a plurality of grip arms 70, 70, .... The rail 41c supports the plurality (for example, 11) of moving carriages 43, 43, ..., and the moving carriages 43, 43, ... are movable on the rail 41c. Each of the link members 44, 44, ... connects the moving carriages 43 and 43 being adjacent to each other. The plurality of moving carriages 43, 43, ... and the plurality of link members 44, 44, ... form an endless chain. As shown in FIGS. 7 to 9, the plurality (for example, 22) of grip arms 70, 70, .... are connected to the lower sections of the moving carriages 43, 43, ... and grip the tool holders 11.

The moving carriages 43, 43, ... of the tool magazine 40 circulate along the rail 41c, and the tool holder 11 gripped by each grip arm 70 is positioned at the exchange position below the spindle 34. Since the rail base 41b is disposed so as to be inclined approximately 30 degrees from the horizontal plane, the axial direction of the tool magazine 40 is inclined approximately 30 degrees toward the spindle head 32 from the vertical line (see FIG. 3).

The moving carriage 43 has a base plate 46, the inner rollers 47 and 47, the outer rollers 48 and 48, and a plurality of pins 49, 49, ... The base plate 46 has a nearly rectangular shape and supports the inner rollers 47 and 47 and the outer rollers 48 and 48 on its lower face so that the rollers 47,48 are rotatable around their axes in the normal direction of the lower face.

Each of the inner rollers 47 and 47 and the outer rollers 48 and 48 has a disc shape and has a V-groove around the outer circumference thereof. The V-grooves of the inner rollers 47 and 47 are fitted on the fitting section 41d provided on the inner circumferential side face of the rail 41c, and the V-grooves of the outer rollers 48 and 48 are fitted on the fitting section 41d provided on the outer circumferential side face of the rail 41c.

Six pins 49, 49, ... are provided on the upper face of the base plate 46. When the moving carriage 43 is located at the semicircular portion of the rail 41c, the plurality (for example, 6) of pins 49, 49, ... on the moving carriage 43 are arranged on a circumference concentric with the semicircle. The plurality of pins 49, 49, ... are engaged with a gear 51.

Each of the link members 44, 44, ... is used to connect the moving carriages 43 and 43 adjacent to each other. In each moving carriage 43, connecting shaft members 49b and 49b are provided on the second pins 49 and 49 of the six pins 49, 49, ... from both ends of the moving carriage 43. The link members 44, 44, ... are connected to the moving carriages 43 via the connecting shaft members 49b and 49b. Two of the grip arms 70, 70, .... are mounted at the lower section of each of the moving carriages 43, 43, ... The portion of the grip arm 70 for gripping the tool holder 11 is rocked so as to get close to and away from the lower end section of the spindle 34 to perform tool exchange. The grip arms 70, 70, .... will be described later in detail.

The grip pin units 79 and 79 of each grip arm 70 are disposed so as to be directed to the inner side of the rail 41c. The direction in which the two grip arms 70 and 70 mounted on the moving carriage 43 are arranged is the direction along the rail 41c. Since the moving carriages 43, 43, ... are arranged along the rail 41c, all the grip arms 70, 70, ... are arranged in the direction along the rail 41c. Since the grip arms 70, 70, ... are disposed at appropriate intervals, a sufficient spatial margin is present between the grip arms 70 and 70 adjacent to each other.

As shown in FIGS. 6 and 7, the magazine drive section 50 has the gear 51 and a magazine drive motor 52 and is installed on the mounting base 41e located behind the column 28. The gear 51 is an external gear having a trochoidal tooth surface, for example, and is rotatably installed on the upper face of the mounting base 41e. The face of the gear is nearly parallel with the upper face of the mounting base 41e. The gear 51 is engaged with the pins 49, 49, ... on the moving carriage 43. The diameter of the gear 51 is smaller (for example, approximately 1/2) than the diameter of the semicircular portion of the rail 41c. Since the diameter of the gear 51 is small, the tool magazine 40 can be made compact without mechanically interfering with the column 28.

The rotation shaft (not shown) of the magazine drive motor 52 is directly connected to the shaft of the gear 51 to rotate and drive the gear 51. When the gear 51 is rotated, the gear 51 pushes the pins 49, 49, ... mounted on the moving carriage 43 in the tangential direction of the circumference of the rail 41c. The moving carriage 43 is moved on the rail 41c by the rotation of the gear 51. The magazine drive motor 52 rotates the gear 51 to convey the moving carriage 43. When tool exchange is performed, the tool magazine 40 conveys a predetermined grip arm 70 to the exchange position (at the front lower end section of the rail base 41b) below the spindle 34.

The grip arm 70 is rocked by a cam mechanism 60 and exchanges the tool holder 11 to be mounted in the spindle 34. A tool has been mounted beforehand in the tool holder 11.

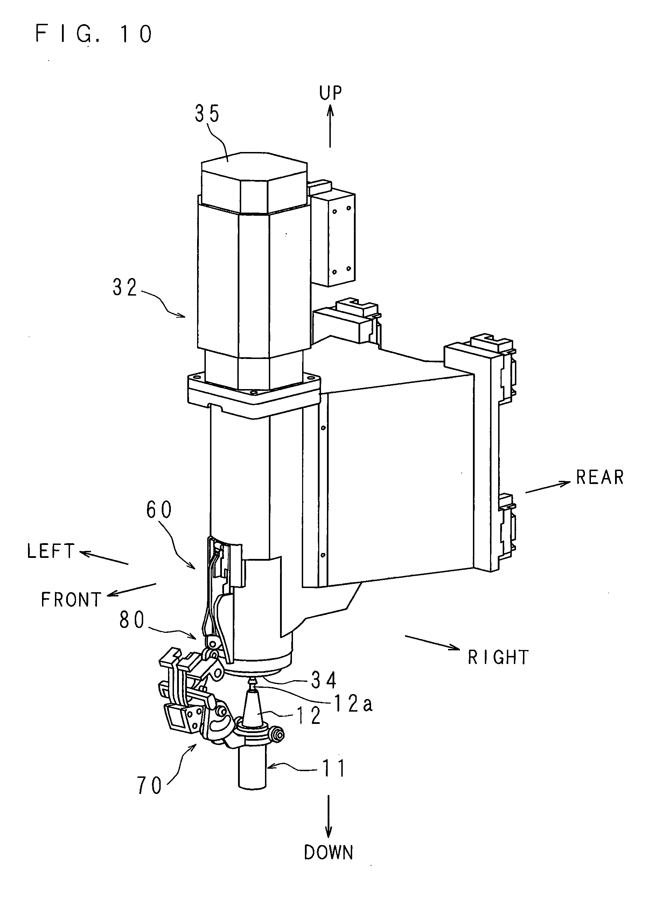

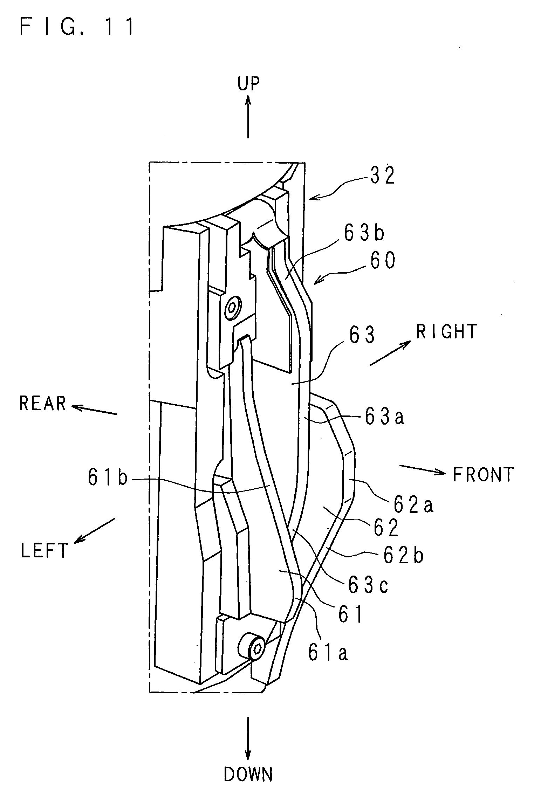

As shown in FIGS. 10 and 11, the cam mechanism 60 is installed on the front face of the spindle head 32. The cam mechanism 60 has an approaching cam 61, a separating cam 62, and a positioning cam 63. The approaching cam 61, the separating cam 62, and the positioning cam 63 each have a plate shape extending long in the up-down direction and protruding from the front face of the spindle head 32. The approaching cam 61, the positioning cam 63, and the separating cam 62 are arranged from left to right in this order. The protruding width (the width in the front-rear direction) of the approaching cam 61 decreases in the upward direction from the apex 61a thereof located slightly above the lower end. On the lower side of the approaching cam 61 from the apex 61a, the protruding width (the width in the front-rear direction) decreases in the downward direction. The approaching cam 61 has a cam face 61b increasing in height from the upper end in the downward direction in a tapered shape and connected to the apex 61a.

The separating cam 62 has a flat apex section 62a at a portion slightly above the central section in the up-down direction, and the protruding width (the width in the front-rear direction) thereof decreases in the downward direction. On the upper side of the separating cam 62 from the apex section 62a, the protruding width decreases in the upward direction. The separating cam 62 has a cam face 62b increasing in height from the lower end in the upward direction in a tapered shape and connected to the apex section 62a.

The upper end section of the approaching cam 61 is located above the upper end section of the separating cam 62, and the lower end section of the separating cam 62 is located below the lower end section of the approaching cam 61. The apex section 62a of the separating cam 62 is away from the apex 61a of the approaching cam 61 in the up-down direction, and the positions of the two in the front-rear direction are nearly the same. The inclination angle of the cam face 61b and the inclination angle of the cam face 62b from the up-down direction are approximately the same, but the directions thereof are opposite to each other.

The positioning cam 63 has a flat section 63a having a constant protruding width at the central section thereof in the up-down direction. On the upper side from the flat section 63a of the positioning cam 63, the protruding width decreases in the upward direction. On the lower side from the flat section 63a of the positioning cam 63, the protruding width decreases in the downward direction. The upper end section of the positioning cam 63 has an upper cam face 63b increasing in height from the upper end in a tapered shape and connected to the flat section 63a, and the lower end section thereof has a lower cam face 63c increasing in height from the lower end in a tapered shape and connected to the flat section 63a. The inclination angles of the upper cam face 63b and the lower cam face 63c from the up-down direction are approximately the same as the inclination angles of the cam face 61b and the cam face 62b.

The upper end of the positioning cam 63 is located above the upper end of the approaching cam 61. The lower end of the positioning cam 63 is located at a position approximately the same as the lower end of the approaching cam 61. The flat section 63a is located more rearward than the apex section 62a, and the height of the flat section 63a is lower than that of the apex section 62a.

The approaching cam 61 and the separating cam 62 make contact with a first cam follower 71 and a second cam follower 72, respectively, and the positioning cam 63 makes contact with a positioning cam follower 83.

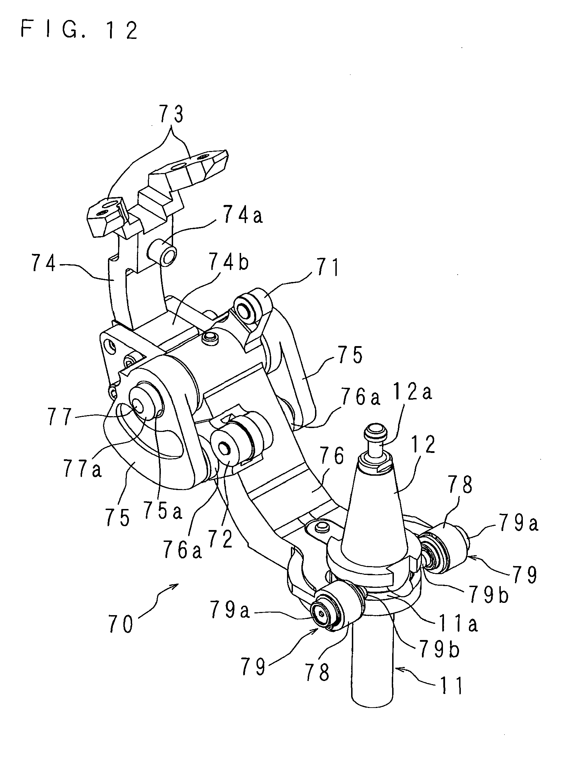

As shown in FIG. 12, the grip arm 70 has mounting plates 73 that are installed on the above-mentioned moving carriage 43. A support rod 74 is connected to the mounting plates 73, and the support rod 74 protrudes downward from the mounting plates 73.The support rod 74 has a positioning pin 74a (second positioning section) that makes contact with a pin receiving section 81c (contacted section).The positioning pin 74a protrudes rearward from the support rod 74.

The support rod 74 has a block 74b at the lower end section thereof.Guide plates 75 and 75 each having a first concave section 751, a second concave section 752, and a flat face 753 are secured to the left and right side faces of the block 74b, respectively. The guide plates 75 and 75 are opposed to each other.Each guide plate 75 has a holding fan shape expanding downward from the upper end section thereof used as a base point in side view. The upper end section of the guide plate 75 has an arm shaft hole 75a into which the arm shaft 77 is inserted. The positioning pin 74a passes through the support rod 74 in a direction orthogonal to the axial direction of the arm shaft hole 75a and in a direction orthogonal to the up-down direction and protrudes from the support rod 74.

The upper section of an arm section 76 is located between the two guide plates 75 and 75. The arm section 76 extends in the up-down direction and has a bent shape.The arm shaft 77 is secured to the upper end section of the arm section 76, and both end sections of the arm shaft 77 protrude from both sides of the upper end section of the arm section 76. Tapers 77a and 77a are formed at both end sections of the arm shaft 77. The arm shaft 77 is rotatably inserted into the arm shaft holes 75a and 75a of the guide plates 75 and 75. The guide plates 75 and 75 rockably support the arm section 76 via the arm shaft 77. In this embodiment, the rocking of the arm section 76 is referred to as the rocking of the grip arm 70.

The lower end section of the arm section 76 is bifurcated. The arm section 76 has holding cylinders 78 and 78 at the tip end sections of the bifurcated lower end section.The axial direction of the holding cylinders 78 is the same as that of the arm shaft 77. The holding cylinders 78 hold grip pin units 79 and 79. The grip arm 70 is installed on the moving carriage 43 so that the arm shaft 77 is placed along the rail 41c. The axial direction of the arm shaft 77 of the grip arm 70 located at the exchange position is the left-right direction.

As shown in FIG. 12, each grip pin unit 79 has a holder 79a having a closed cylinder shape and a pin 79b accommodated in the holder 79a. The tip end section of the pin 79b protrudes from the holder 79a, and a spring (not shown) inside the holder 79a biases the pin 79b in the protruding direction. The tip end face of the pin 79b has a curved shape protruding outward. The tip end faces of the pins 79b and 79b are opposed to each other, and each grip pin unit 79 is inserted into each holding cylinder 78 and secured thereto. The pins 79b and 79b are used to mount and dismount the tool holder 11 (the tool held in the tool holder 11).

The lower side of the tapered mounting section 12 of the tool holder 11 has a groove 11a around the entire circumference thereof. When the tool holder 11 is inserted between the pins 79b and 79b, the pins 79b and 79b are fitted in the groove 11a, thereby holding the tool holder 11.

As the grip arm 70 is rocked clockwise, the grip pin units 79 and 79 move away from the spindle head 32, whereby the grip pin units 79 and 79 do not interfere with the spindle head 32.

The first cam follower 71 making contact with the approaching cam 61 is provided above the arm shaft 77. The first cam follower 71 protrudes upward. The first cam follower 71 is a circular roller and rotates around an axis in parallel with the arm shaft 77. The second cam follower 72 making contact with the separating cam 62 is provided near the arm shaft 77 of the arm section 76. The second cam follower 72 is a circular roller and rotates around an axis in parallel with the arm shaft 77.

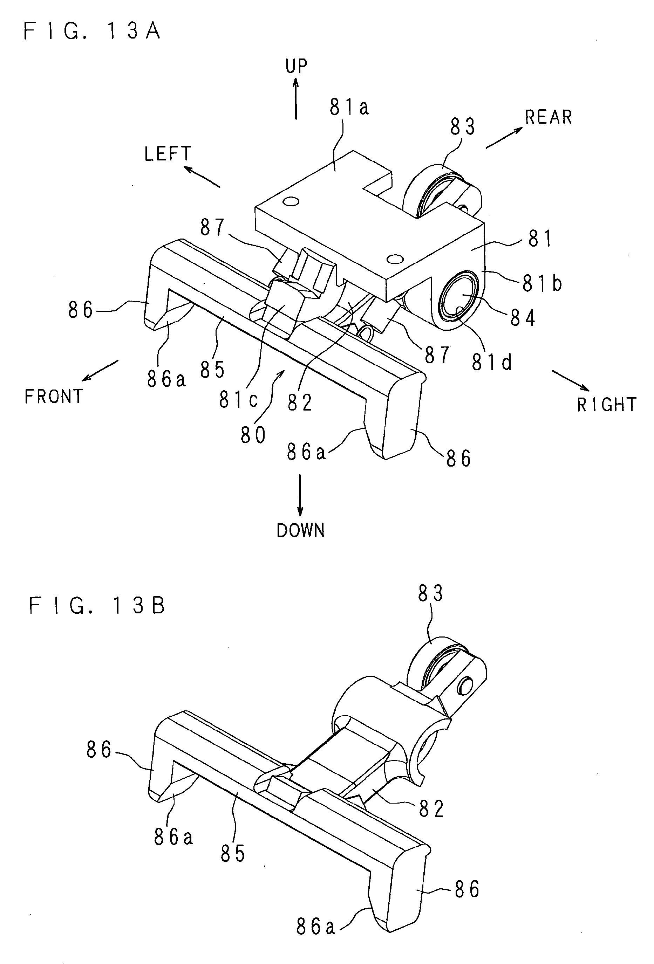

As shown in FIGS. 6, 10, and 13, a positioning mechanism 80 (positioning section) is provided on the rail base 41b. The positioning mechanism 80 is used to align the positions of the tool and the spindle 34. The positioning mechanism 80 has a base 81 secured to the lower end section of the rail base 41b. The lower end section of the rail base 41b is located at the exchange position.

The base 81 has a mounting plate 81a, extension sections 81b and 81b, and the pin receiving section 81c.

The mounting plate 81a has a rectangular upper face, and the upper face is secured to the lower face of the lower end section of the rail base 41b. The pin receiving section 81c is L-shaped in side view and has a portion extending downward from the front section of the mounting plate 81a and a portion protruding forward from the tip end of the portion in parallel with the front-rear direction.

The extension sections 81b and 81b extend downward respectively from both side sections of the mounting plate 81a. The extension sections 81b and 81b have a block shape and are opposed to each other. Positioning shaft holes 81d and 81d passing through the extension sections 81b and 81b are provided at the lower ends of the extension sections 81b and 81b. The axial centers of the positioning shaft holes 81d and 81d are coincident with each other. A rotation rod 82 is provided between the extension sections 81b and 81b so as to intersect the axial centers of the positioning shaft holes 81d and 81d. The rotation rod 82 is inclined so that its front side is inclined downward.

The rotation rod 82 is provided with a rotation shaft 84 that is nearly orthogonal to the rotation rod 82. The rotation shaft 84 is rotatably inserted into the two positioning shaft holes 81d and 81d. The rear end section of the rotation rod 82 rotatably supports the positioning cam follower 83. The positioning cam follower 83 is a cylindrical roller that is rotatable around an axis in parallel with the rotation shaft 84. The front end section of the rotation rod 82 is provided with a rod member 85 extending in parallel with the rotation shaft 84. The rod member 85 is connected to the base 81 via springs 87 and 87. The front end section of the rotation rod 82 is connected to the central section of the rod member 85.

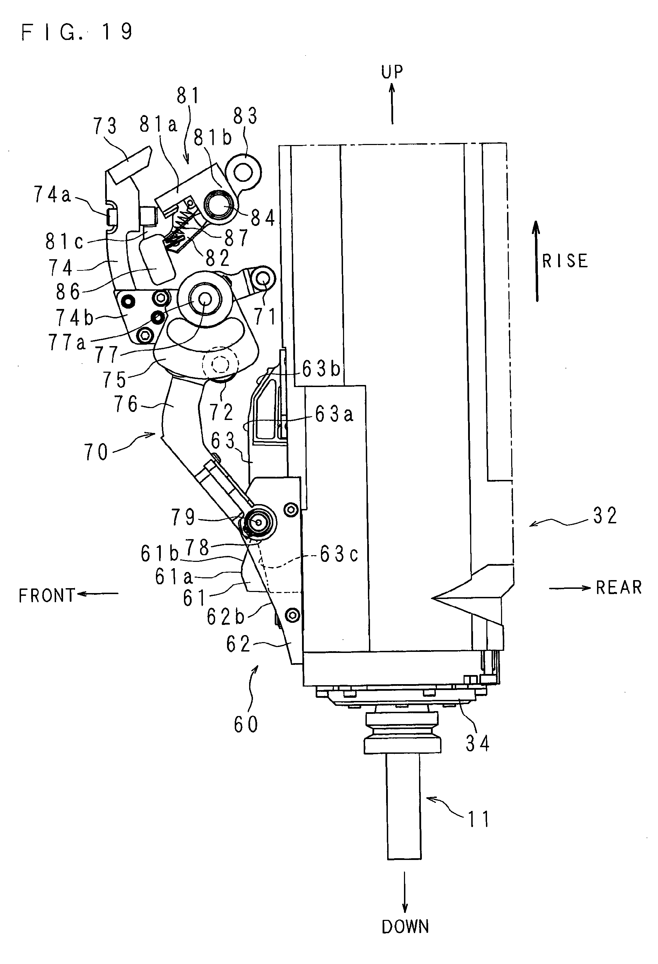

Positioning pieces 86 and 86 (axial positioning sections) extending downward are respectively provided with both end sections of the rod member 85. Each positioning piece 86 has a block shape. The positioning pieces 86 and 86 are opposed to each other, and the opposed portions are respectively provided with inclined faces 86a and 86a. The width of the inclined face 86a of the positioning piece 86 in the left-right direction decreases toward the lower end thereof. The inclination angle of the inclined face 86a is nearly the same as the inclination angle of the taper 77a. The dimension between the positioning pieces 86 and 86 is equal to or slightly larger than the axial dimension of the arm shaft 77. The springs 87 and 87 bias the positioning pieces 86 and 86 clockwise (see FIG. 19) around the rotation shaft 84 in right side view.

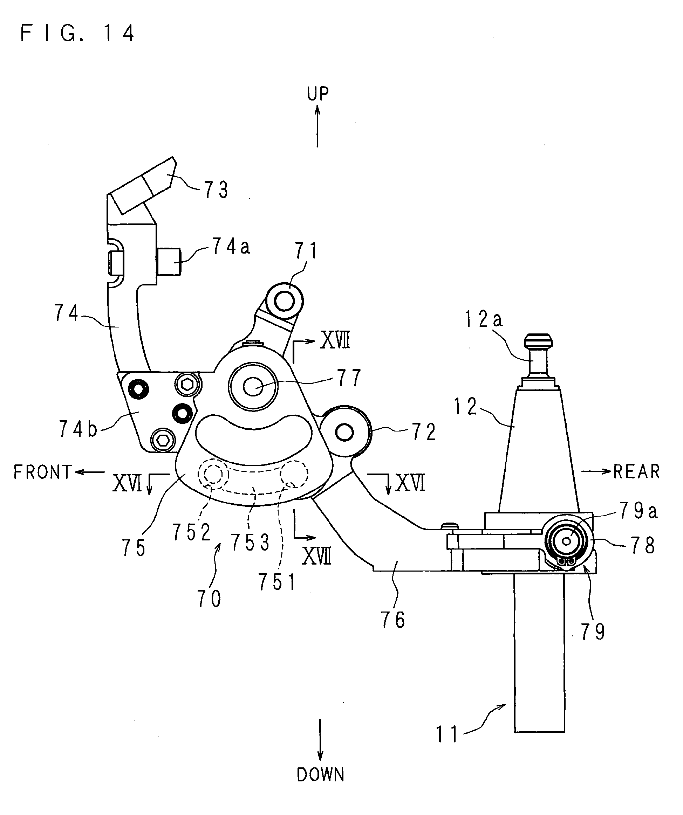

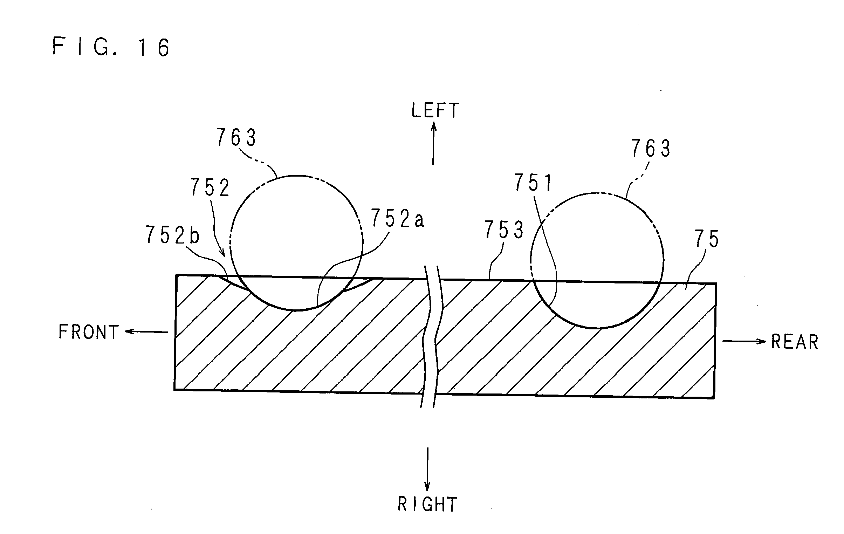

As shown in FIGS. 14 and 16, the guide plate 75 has the first concave section 751 and the second concave section 752 spaced in the front-rear direction at the lower section of the face thereof opposed to the arm section 76.

The first concave section 751 is located in the rear end section of the guide plate 75, and the second concave section 752 is located in the front end section of the guide plate 75. The distance between the arm shaft 77 and the first concave section 751 is equal to the distance between the arm shaft 77 and the second concave section 752.

The guide plate 75 has the flat face 753 connected to the first concave section 751 and the second concave section 752. The flat face 753 has an arc shape in which the distance between the arm shaft 77 and the first concave section 751 is used as the radius of curvature. The flat face 753 is formed in the rocking direction of the grip arm 70.

The surfaces of the first concave section 751, the second concave section 752, and the flat face 753 are ground so as to be smoother than at least the surfaces of any other sections of the guide plate 75 on the side of the arm section 76. The first concave section 751, the second concave section 752, and the flat face 753 are located on the same arc in which the arm shaft 77 serves as the center of the radius of curvature.

The first concave section 751 has a nearly hemispherical shape and the depth thereof is larger than that of the second concave section 752. The curvature of the first concave section 751 is the same as that of a spherical member 763 described later. The second concave section 752 has a spherical face section 752a having the same radius of curvature as that of the spherical member 763 and a curved face section 752b connected to the fringe portion of the spherical face section 752a and formed along the fringe portion. The radius of curvature of the curved face section 752b is larger than that of the spherical face section 752a. Hence, the second concave section 752 has a step section at the boundary between the curved face sections different in the radius of curvature.

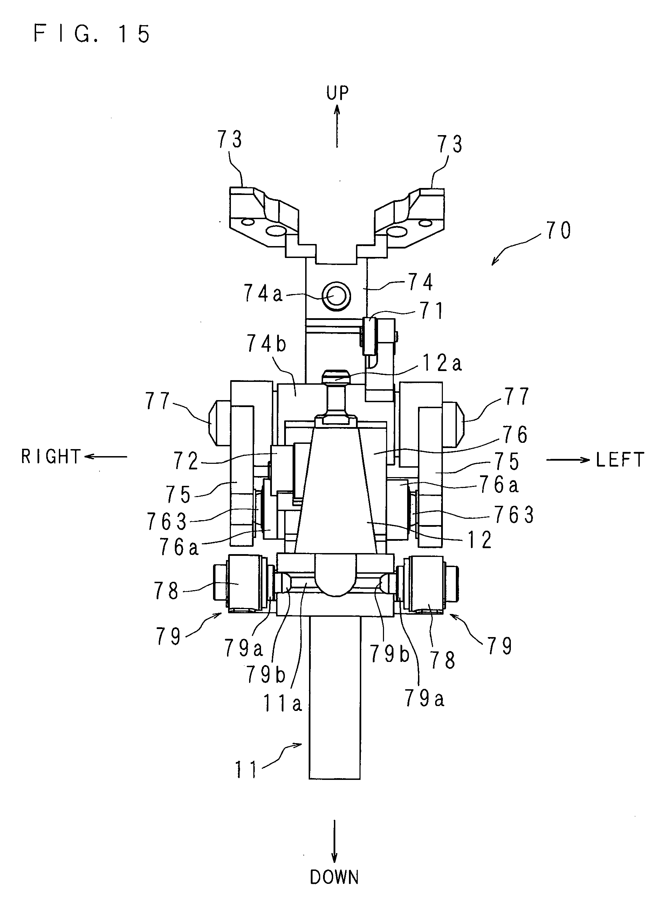

As shown in FIGS. 12 and 15, the side faces of the arm section 76, respectively opposed to the guide plates 75 and 75, have protruding sections 76a and 76a protruding toward the guide plates 75 and 75. The distance between the protruding section 76 and the arm shaft 77 is equal to the distance between the arm shaft 77 and the first concave section 751.The protruding position of each protruding section 76a is located between the arm shaft 77 and the grip pin unit 79 and is in the vicinity of the arm shaft 77.

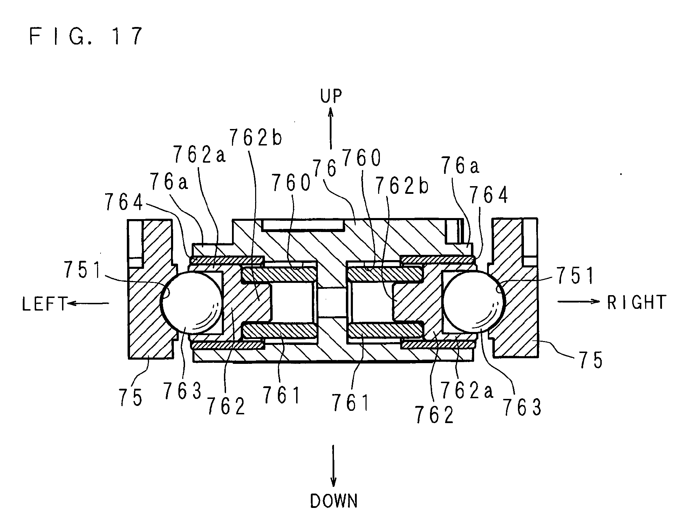

As shown in FIG. 17, the protruding section 76a has an accommodating concave section 760 recessed in a direction (the left-right direction) in parallel with the axial direction of the arm shaft 77. The accommodating concave section 760 accommodates a biasing spring 761, a spherical member holding cylinder 762, and the spherical member 763.

The biasing spring 761 is a compression coil spring placed in a direction parallel with the left-right direction and provided in the deep inner portion of the accommodating concave section 760. The spherical member holding cylinder 762 has a closed cylinder section 762a formed in a direction parallel with the left-right direction and an insertion section 762b that is inserted into the biasing spring 761. The insertion section 762b protrudes from the bottom section of the closed cylinder section 762a to the opposite side of the opening of the closed cylinder section 762a and has a cylindrical shape that is coaxial with the closed cylinder section 762a. The diameter of the insertion section 762b is equal to or smaller than the inside diameter of the biasing spring 761. The axial dimension (the dimension in the left-right direction) of the insertion section 762b is equal to or less than the half of the axial dimension (the dimension in the left-right direction) of the biasing spring 761.

A guide cylinder 764 is fitted in the inside of the opening portion of the accommodating concave section 760. The guide cylinder 764 is used to smooth the movement of the spherical member holding cylinder 762 in the left-right direction. The guide cylinder 764 has a cylindrical shape, and the outside diameter of the closed cylinder section 762a is nearly equal to the inside diameter of the guide cylinder 764.

One end section of the biasing spring 761 is located on the outer circumferential face of the insertion section 762b, and the biasing spring 761 is held between the bottom face of the closed cylinder section 762a and the bottom face of the accommodating concave section 760. The opening portion of the closed cylinder section 762a and the opening portion of the accommodating concave section 760 are located at nearly identical positions in the left-right direction. The closed cylinder section 762a rotatably accommodates the spherical member 763 therein, and a nearly half of the spherical member 763 is located inside the closed cylinder section 762a.The other nearly half of the spherical member 763 protrudes from the opening (the protruding section 76a) of the accommodating concave section 760 and makes contact with the guide plate 75.

The spherical member 763 and the spherical member holding cylinder 762 are moved to the deep side of the accommodating concave section 760 while compressing the biasing spring 761. When the biasing spring 761 is restored, the spherical member 763 and the spherical member holding cylinder 762 are moved toward the opening of the accommodating concave section 760. Even when the biasing spring 761 is compressed most densely, the insertion section 762b does not make contact with the bottom face of the accommodating concave section 760.

The guide plates 75 and 75 are secured to the moving carriage 43 via the block 74b and the mounting plates 73 and 73 as described above. The arm section 76 is rocked around the arm shaft 77 in the space between the guide plates 75 and 75.

The distance between the protruding section 76a (the accommodating concave section 760) and the arm shaft 77 is equal to the distance between the arm shaft 77 and the first concave section 751, and the first concave section 751, the second concave section 752, and the flat face 753 are located on the same arc in which the arm shaft 77 serves as the center of the circle of curvature. When the arm section 76 is rocked around the arm shaft 77 serving as the center axis of the rocking, the spherical member 763 is opposed to and makes contact with the first concave section 751, the second concave section 752, and the flat face 753, and rolls on the flat face 753. Hence, the guide plates 75 and 75 guide the rocking of the grip arm 70. The biasing spring 761 presses the spherical member 763 to the first concave section 751, the second concave section 752, and the flat face 753 at all times, whereby the spherical member 763 does not fall out from the accommodating concave section 760 during the rocking of the grip arm 70.

As described above, the first concave sections 751, the second concave sections 752, the flat faces 753, and the spherical members 763, respectively two in number, are used. Even if one of the spherical members 763 becomes defective due to attachment of chips, coolant, or the like, the other spherical member 763 can continuously guide the rocking of the grip arm 70. Hence, the machine tool 100 can be improved in reliability.

As shown in FIGS. 14 and 17, when the grip arm 70 grips the tool holder 11, each spherical member 763 is fitted in each first concave section 751. When each spherical member 763 is fitted in each first concave section 751 at the exchange position, each grip pin unit 79 is closest to the tapered bore 34a. While each spherical member 763 is fitted in each first concave section 751, even if the grip arm 70 is moved by the rotation of the tool magazine 40, each spherical member 763 does not move away from each first concave section 751, whereby the grip arm 70 can maintain its posture.

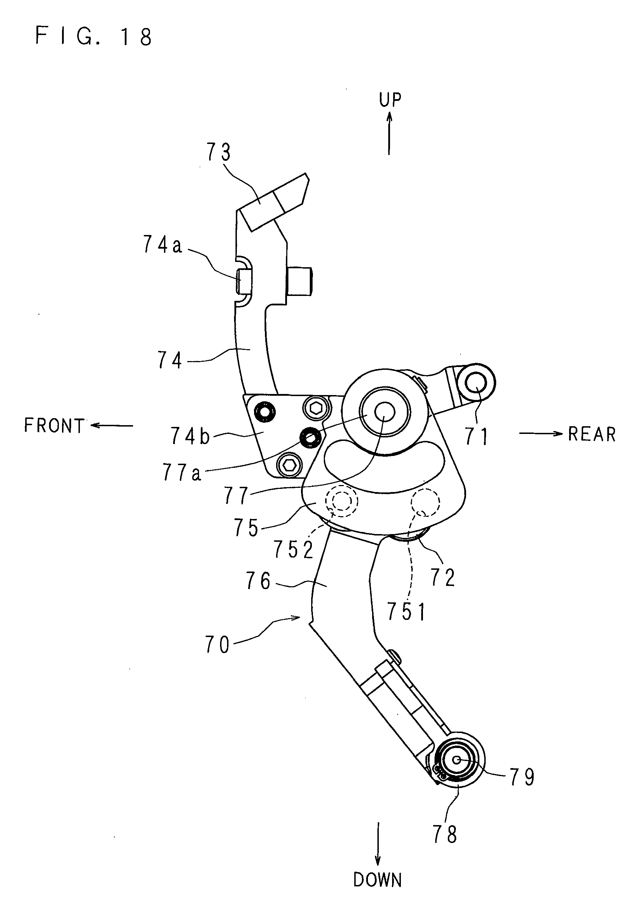

As shown in FIG. 18, when the grip arm 70 does not grip the tool holder 11 and stands by at the exchange position, each spherical member 763 is fitted in each second concave section 752. When each spherical member 763 is fitted in each second concave section 752, each grip pin unit 79 is most away from the tapered bore 34a. When each spherical member 763 is fitted in the second concave section 752, the grip arm 70 can maintain its posture at the exchange position.

When the cam face 61b of the approaching cam 61 makes contact with the first cam follower 71 of the grip arm 70 while the grip arm 70 has the posture shown in FIG. 18, the arm section 76 is rocked counterclockwise around the arm shaft 77 serving as the center of the rocking by the force exerted from the cam face 61b to the first cam follower 71, and each spherical member 763 can move out of each second concave section 752 easily. Each spherical member 763 having gotten out of each second concave section 752 rolls on each flat face 753 and moves toward each first concave section 751. Since the second concave section 752 is shallower than the first concave section 751 and the inclination of the curved face section 752b is smaller than that of the spherical face section 752a as shown in FIG. 16, the spherical member 763 can move out of the second concave section 752 more easily than getting out of the first concave section 751. The grip arm 70 shown in FIG. 18 corresponds to the grip arm 70 shown in FIG. 19.

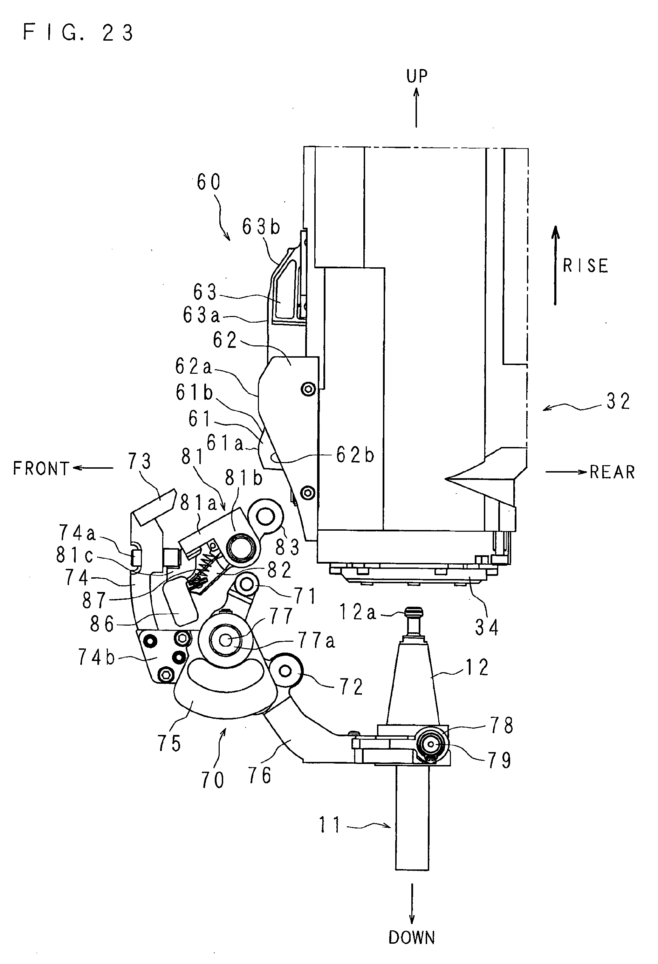

When the cam face 62b of the separating cam 62 makes contact with the second cam follower 72 of the grip arm 70 while the grip arm 70 has the posture shown in FIG. 14, the arm section 76 is rocked clockwise around the arm shaft 77 serving as the center of the rocking by the force exerted from the cam face 62b to the second cam follower 72, and each spherical member 763 can move out of each first concave section 751. Each spherical member 763 having gotten out of each first concave section 751 rolls on each flat face 753 and is moved toward each second concave section 752. The grip arm 70 shown in FIG. 14 corresponds to the grip arm 70 shown in FIG. 23.

As shown in FIG. 19, when work machining is completed, the tool holder 11 is mounted in the spindle 34. At this time, one of the grip arms 70 stands by at the exchange position, and the grip arm 70 does not grip any tool holder 11. The arm section 76 orients the holding cylinders 78 and 78 downward.

The first cam follower 71, the second cam follower 72, and the positioning cam follower 83 do not make contact with the approaching cam 61, the separating cam 62, and the positioning cam 63. The positioning cam follower 83 protrudes rearward and obliquely upward from the rotation shaft 84 so as to be opposed to the upper cam face 63b. The first cam follower 71 protrudes rearward and obliquely upward from the arm shaft 77 so as to be opposed to the cam face 61b. The first cam follower 71 is located on the rear side of the positioning cam follower 83. The second cam follower 72 is located on the front side of the positioning cam follower 83, and the position of the rear end of the second cam follower 72 in the front-rear direction is approximately equal to the position of the apex section 62a.

The rotation rod 82 protrudes forward and obliquely downward from the rotation shaft 84, and the positioning pieces 86 and 86 are provided at the tip end section thereof. Each positioning piece 86 is located forward and obliquely upward from the arm shaft 77.

As described above, each spherical member 763 is fitted in each second concave section 752 (see FIG. 16), and the grip arm 70 maintains its posture in which each holding cylinder 78 is oriented downward.

After machining is completed, the spindle head 32 rises from the machining position to the conveying position (see the arrow shown in FIG. 19) via the exchange position. The conveying position is a position in which the grip arm 70 does not interfere with the spindle head 32 even when the tool magazine 40 conveys the grip arm 70.

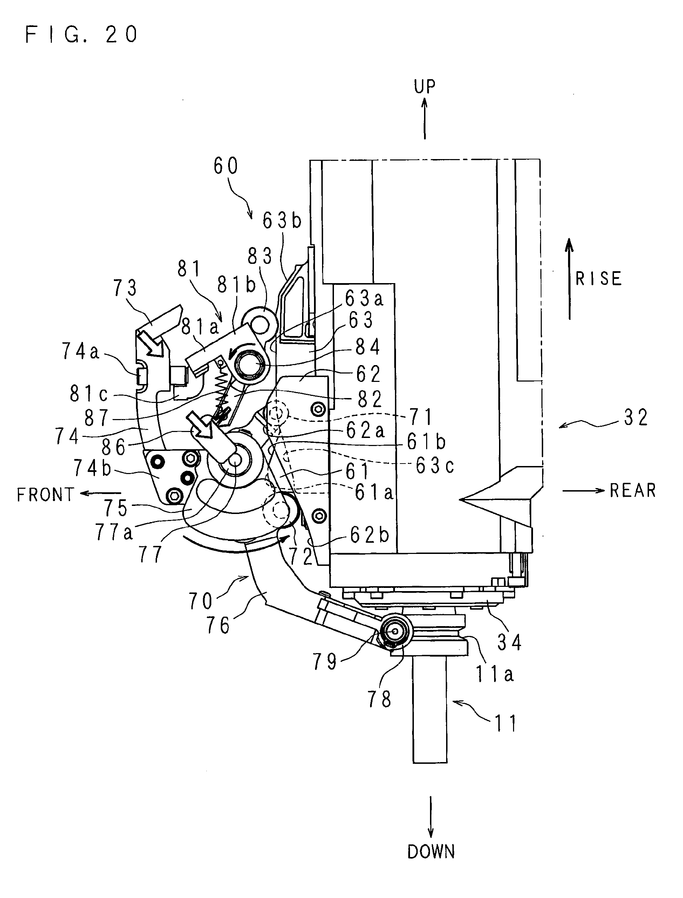

When the spindle head 32 is rising, the positioning cam follower 83 makes contact with the upper cam face 63b of the positioning cam 63. As shown in FIG. 20, as the spindle head 32 rises, the positioning cam follower 83 moves downward on the upper cam face 63b of the positioning cam 63. Since the height of the upper cam face 63b of the positioning cam 63 increases in the downward direction from its upper end, the positioning cam 63 exerts a forward force to the positioning cam follower 83. By this force, the rotation rod 82 is rotated counterclockwise (see the arrow shown in FIG. 20) around the rotation shaft 84 against the elastic forces of the springs 87 and 87. The positioning pieces 86 and 86 are opposed to both end sections of the arm shaft 77 so as to hold the arm shaft 77 therebetween in the axial direction.

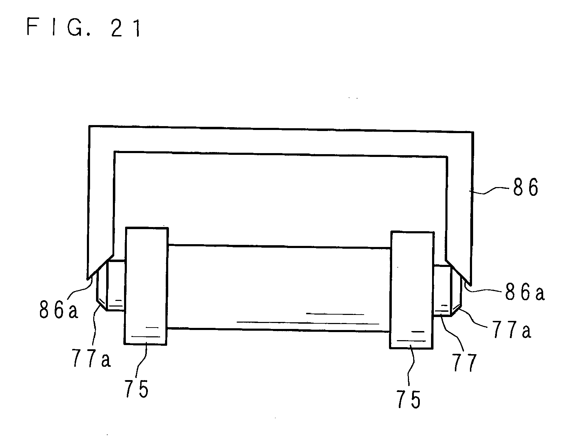

As shown in FIG. 21, when the position of the arm shaft 77 deviates from a predetermined position (the position in which the spindle 34 is aligned with the grip arm 70 during tool exchange) in the axial direction (the left-right direction), the inclined face 86a of the positioning piece 86 makes contact with the taper 77a of the arm shaft 77, whereby a force is exerted to the arm shaft 77 in the axial direction. While the grip arm 70 is supported by the rail base 41b to which the base 81 is secured (see FIG. 6), the positioning of the arm shaft 77 in the axial direction is completed.

Since the positioning pieces 86 and 86 make contact with the arm shaft 77 as indicated by a hollow arrow shown in FIG. 20, the force exerted rearward and obliquely downward is applied to the entire grip arm 70, and the positioning pin 74a makes contact with the pin receiving section 81c. The tip end of the positioning pin 74a makes contact with a portion of the pin receiving section 81c that is oriented in parallel with the up-down direction. The lower section of the positioning pin 74a makes contact with a portion of the pin receiving section 81c that is oriented in parallel with the front-rear direction. Hence, the grip arm 70 is positioned in the up-down direction and the front-rear direction. The first cam follower 71 is located on the cam face 61b of the approaching cam 61. The second cam follower 72 is located on the cam face 62b of the separating cam 62.

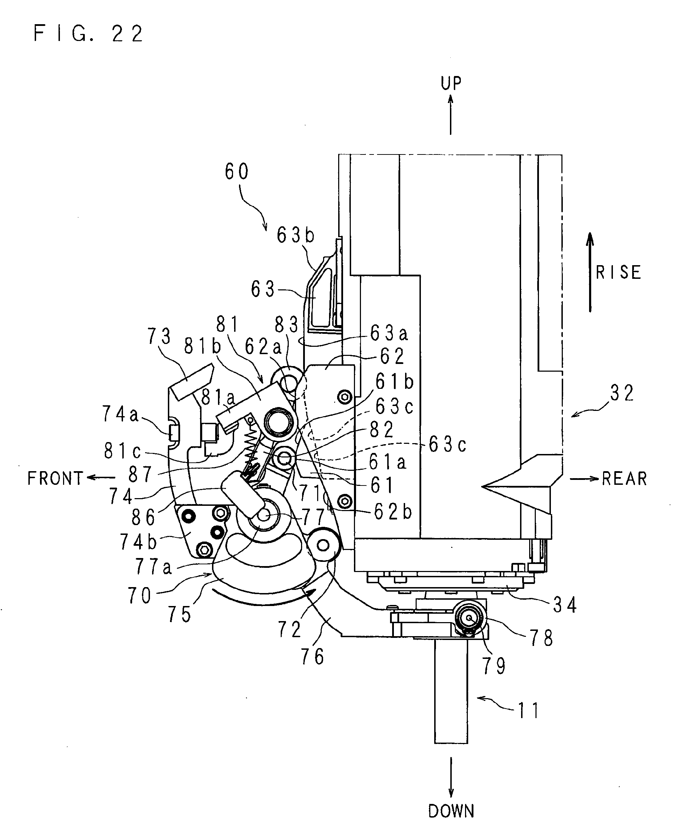

As indicated by the arrows shown in FIGS. 20 and 22, after the positioning of the grip arm 70 in the axial direction of the arm shaft 77 is completed, the spindle head 32 in which the tool holder 11 (tool) is mounted is raised further. The first cam follower 71 moves downward on the cam face 61b of the approaching cam 61. Since the height of the cam face 61b increases in the downward direction from its upper end in a tapered shape, the approaching cam 61 exerts a forward force to the first cam follower 71, and the grip arm 70 is rocked counterclockwise around the arm shaft 77 serving as the center of the rocking. At this time, each spherical member 763 moves out of each second concave section 752 and rolls on each flat face 753 and moves toward each first concave section 751. The grip pin units 79 and 79 move close to the tool holder 11 (more specifically, the tool holder 11 mounted in the spindle 34 by fitting the tapered mounting section 12 into the tapered bore 34a). The pins 79b and 79b of the grip pin units 79 and 79 are fitted into the groove 11a of the tool holder 11, whereby the grip arm 70 grips the tool holder 11. Since the positioning cam follower 83 moves on the flat section 63a of the positioning cam 63, the positioning cam 63 exerts a forward force to the positioning cam follower 83, and the grip arm 70 maintains the positioning of the arm shaft 77 in the axial direction thereof. The second cam follower 72 moves on the the cam face 62b. Since the height of the cam face 62b decreases in the downward direction in a tapered shape, the separating cam 62 does not exert any forward force to the second cam follower 72.

As shown in FIG. 23, after the grip arm 70 gripped the tool holder 11, the spindle head 32 reaches the conveying position, and the tool holder 11 is removed from the spindle 34. The first cam follower 71, the second cam follower 72, and the positioning cam follower 83 move away from the approaching cam 61, the separating cam 62, and the positioning cam 63. The rotation rod 82 is rotated clockwise by the elastic restoring forces of the springs 87 and 87. Each spherical member 763 is fitted into each first concave section 751 as described above (see FIGS. 14 and 16).After the spindle head 32 reached the conveying position, the tool magazine 40 conveys the grip arm 70 having gripped another tool holder 11 to the exchange position. Even when the grip arm 70 is moved by the rotation of the tool magazine 40, each spherical member 763 does not move out of each first concave section 751, whereby the grip arm 70 can maintain its posture.

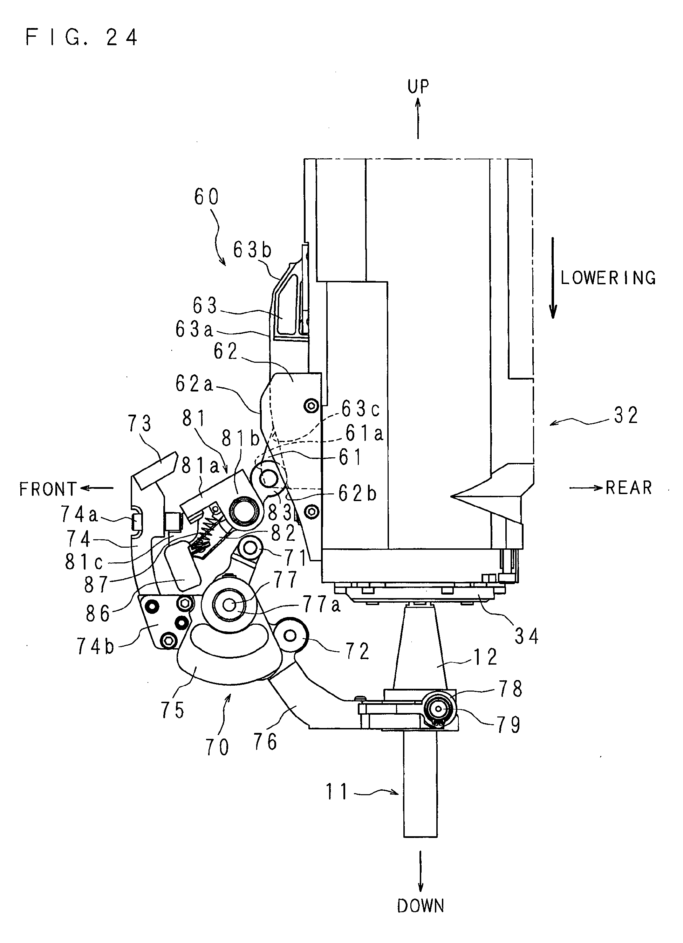

As indicated by the arrow shown in FIG. 24, after grip arm 70 having gripped the other tool holder 11 is conveyed to the exchange position, the spindle head 32 starts lowering. The positioning cam follower 83 makes contact with the lower end section of the positioning cam 63. As the spindle head 32 lowers, the positioning cam follower 83 moves upward on the lower cam face 63c of the positioning cam 63. Since the height of the lower cam face 63c increases in the upward direction from its lower end, the positioning cam 63 exerts a forward force to the positioning cam follower 83.

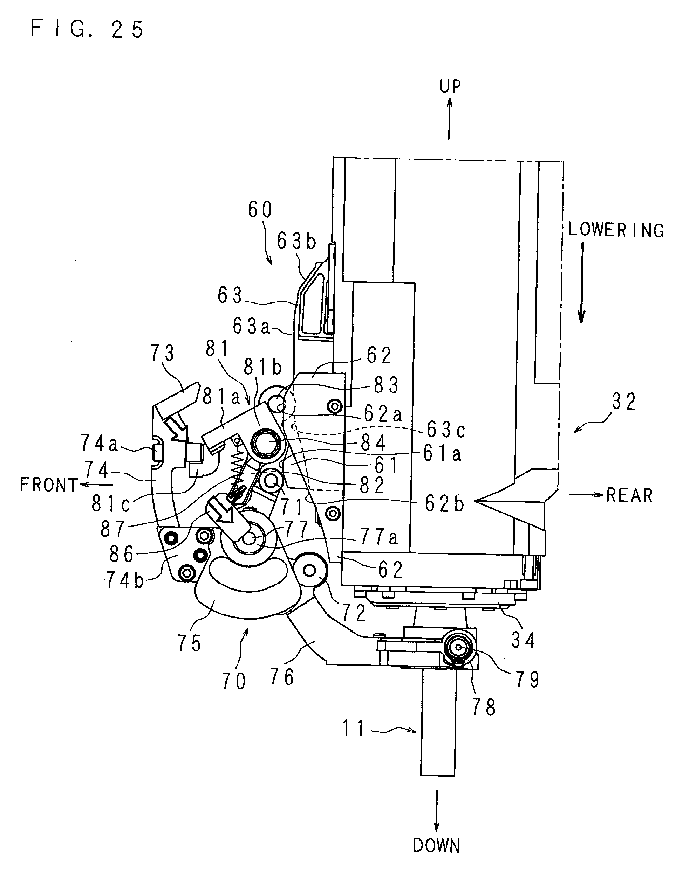

As shown in FIG. 25, the spindle head 32 lowers further. As indicated by the hollow arrow shown in FIG. 25, the rotation rod 82 is rotated counterclockwise around the rotation shaft 84 against the elastic forces of the springs 87 and 87. The positioning pieces 86 and 86 are opposed to both end sections of the arm shaft 77 so as to hold the arm shaft 77 therebetween in the axial direction. As described above, the positioning of the grip arm 70 is completed in the axial direction of the arm shaft 77

When the grip arm 70 is conveyed by rotating the tool magazine 40 so that the grip arm 70 is placed at the exchange position, for example, the grip arm 70 may sometimes be positioned at a position deviating from the exchange position due to the accumulated dimensional tolerance of the link members 44, 44, ... The base 81 is secured to the rail base 41b, and the grip arm 70 is mounted on the moving carriage 43 so that the arm shaft 77 is oriented along the rail 41c. Hence,the deviation in the direction along the track 41c can be eliminated and the position of the grip arm 70 can be aligned with that of the spindle 34 by performing the positioning of the arm shaft 77 in the axial direction using the positioning pieces 86 and 86.

Since the positioning pieces 86 and 86 make contact with the arm shaft 77 as indicated by a hollow arrow shown in FIG. 25, the force exerted rearward and obliquely downward is applied to the entire grip arm 70, and the positioning pin 74a makes contact with the pin receiving section 81c. The tip end of the positioning pin 74a makes contact with the portion of the pin receiving section 81c that is oriented in parallel with the up-down direction. The lower section of the positioning pin 74a makes contact with the portion of the pin receiving section 81c that is oriented in parallel with the front-rear direction. Hence, the grip arm 70 is positioned in the up-down direction and in the front-rear direction.

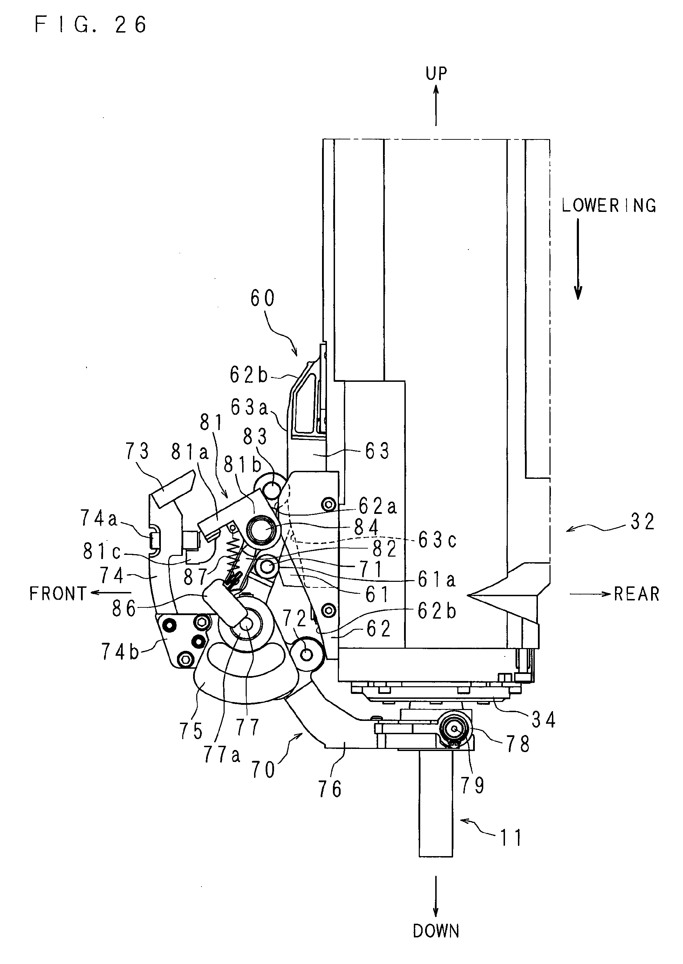

As shown in FIG. 26, after the positioning of the grip arm 70 is completed, the spindle head 32 lowers further. At this time, the tool holder 11 gripped by the grip arm 70 is mounted in the spindle 34. The second cam follower 72 makes contact with the lower end section of the separating cam 62. The first cam follower 71 makes contact with the apex 61a. The positioning cam follower 83 makes contact with the flat section 63a.

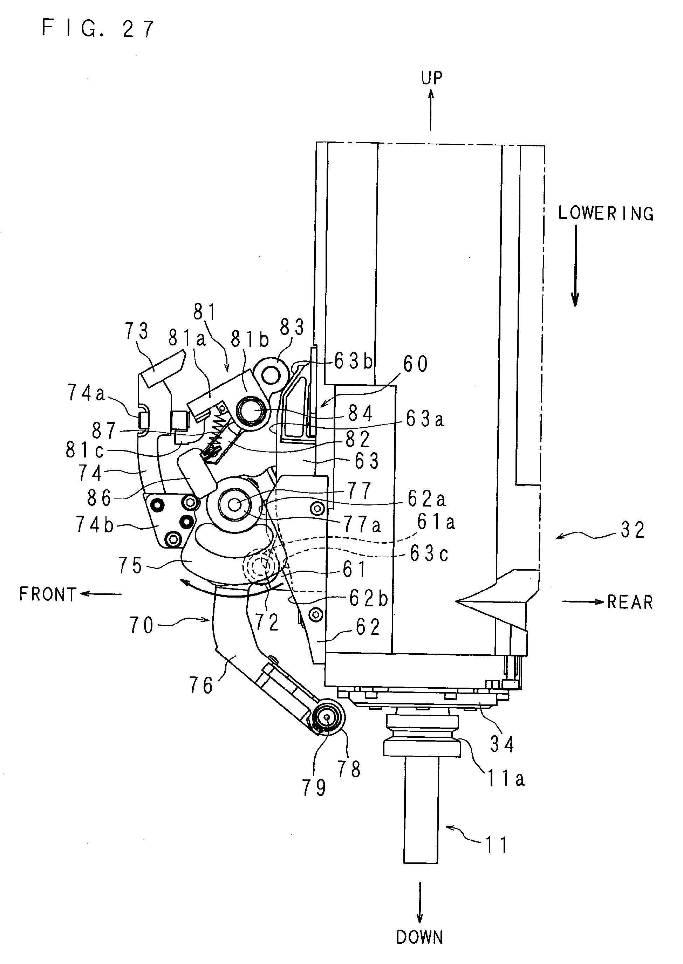

As shown in FIG. 27, the spindle head 32 lowers further. As the spindle head 32 lowers, the second cam follower 72 moves upward on the cam face 62b of the separating cam 62. Since the height of the cam face 62b increases in the upward direction from the lower end in a tapered shape, the separating cam 62 exerts a forward force to the second cam follower 72. As indicated by the arrow shown in FIG. 27, the grip arm 70 is rocked clockwise around the arm shaft 77 serving as the center of the rocking, and the grip pin units 79 and 79 are separated from the tool holder 11. As described above, each spherical member 763 moves out of each first concave section 751 and rolls on each flat face 753 and moves toward each second concave section 752.

The first cam follower 71 moves upward on the cam face 61b. Since the height of the cam face 61b lowers in the upward direction in a tapered shape, the approaching cam 61 does not exert any forward force to the first cam follower 71.The positioning cam follower 83 moves upward on the upper cam face 63b. Since the height of the cam face 63b lowers in the upward direction in a tapered shape, the positioning cam 63 does not exert any forward force to the positioning cam follower 83.

The spindle head 32 in which the tool holder 11 is mounted lowers further and moves toward the machining position. The grip arm 70 is rocked further clockwise, and the grip pin units 79 and 79 move away from the spindle head 32, whereby the grip arm 70 does not interfere with the spindle head 32. The first cam follower 71, the second cam follower 72, and the positioning cam follower 83 move away from the approaching cam 61, the separating cam 62 and the positioning cam 63. Each spherical member 763 is fitted into each second concave section 752, and the grip arm 70 takes the posture shown in FIG. 19.

The machine tool 100 according to this embodiment is equipped with the positioning mechanism 80 having the positioning cam follower 83 and the positioning pieces 86. The spindle head 32 moves between the machining position and the conveying position at the time of tool exchange, and the positioning cam follower 83 makes contact with the positioning cam 63 provided on the spindle head 32. The positioning cam 63 exerts a force to the positioning cam follower 83, and the positioning pieces 86 are moved toward the arm shaft 77 of the grip arm 70. The positioning pieces 86 perform the positioning of the grip arm 70 in the axial direction of the arm shaft 77. The machine tool 100 exchanges the tool holder 11 (tool). Since the machine tool 100 performs tool exchange after the positioning of the grip arm 70 is completed, the tool is securely mounted in the spindle head 32 and does not fall out from the spindle head 32. For this reason, the tool and the spindle 34 are not broken during work machining.

When the positioning cam 63 exerts a force to the positioning cam follower 83, the rotation rod 82 is rotated around the rotation shaft 84 used as a fulcrum. The positioning pieces 86 and 86 are opposed to both end sections of the arm shaft 77 and restrict the position of the arm shaft 77 in the axial direction. The positioning pieces 86 and 86 position the grip arm 70 in the axial direction.

The end sections of the arm shaft 77 have the tapers 77a. The positioning pieces 86 have the inclined faces 86a adapted to the tapers 77a. For example, the inclination angle of the taper 77a is nearly equal to that of the inclined face 86a. When the rotation rod 82 is rotated and the positioning pieces 86 get close to both end sections of the arm shaft 77, the positioning pieces 86 smoothly make contact with the arm shaft 77. The positioning pieces 86 thus smoothly position the grip arm 70.

The positioning pin 74a makes contact with the pin receiving section 81c. The positioning pin 74a performs the positioning of the grip arm 70 in a direction intersecting the axial direction (the left-right direction) of the arm shaft 77. The positioning pin 74a protrudes in one direction (the front-rear direction) orthogonal to the axial direction of the arm shaft 77 and makes contact with the pin receiving section 81c in two directions (the front-rear direction and the up-down direction) orthogonal to the axial direction of the arm shaft 77. The positioning pin 74a positions the grip arm 70 in the above-mentioned two directions. The positioning pin 74a should only protrude in a direction intersecting the axial direction, and the protruding direction of the positioning pin 74a is not limited to the direction orthogonal to the axial direction.

When the spindle head 32 in which a tool is mounted is moved from the machining position to the conveying position, the machine tool 100 positions the grip arm 70 in which no tool is gripped. The grip arm 70 gets close to the spindle head 32 and grips the tool. The position of the grip arm 70 is aligned with that of the spindle 34, whereby the grip arm 70 can securely grip the tool mounted in the spindle 34 and can dismount the tool from the spindle 34.

After the tool is dismounted from the spindle head 32, the tool magazine 40 rotates and conveys another grip arm 70 in which a tool is gripped to the conveying position. The spindle head 32 starts moving from the conveying position to the machining position, and the grip arm 70 is positioned. The grip arm 70 gets close to the spindle head 32 and mounts the tool in the spindle 34. Since the tool is mounted after the position of the grip arm 70 is aligned with that of the spindle 34, the tool is securely mounted in the spindle 34. After mounting the tool in the spindle 34, the grip arm 70 moves away from the spindle head 32.

The machine tools according to changed embodiments will be described below.

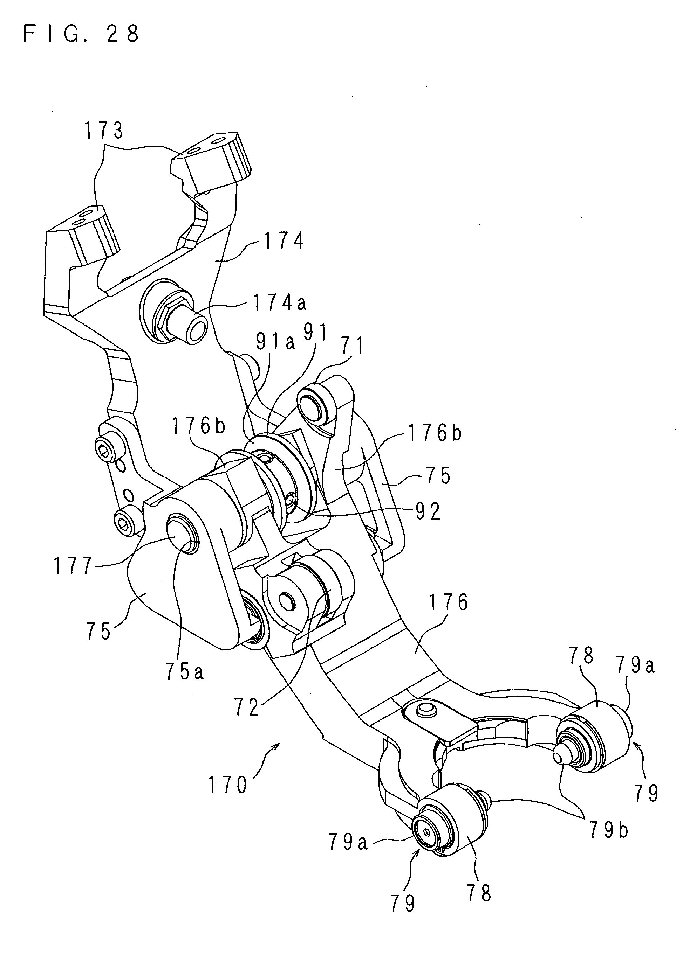

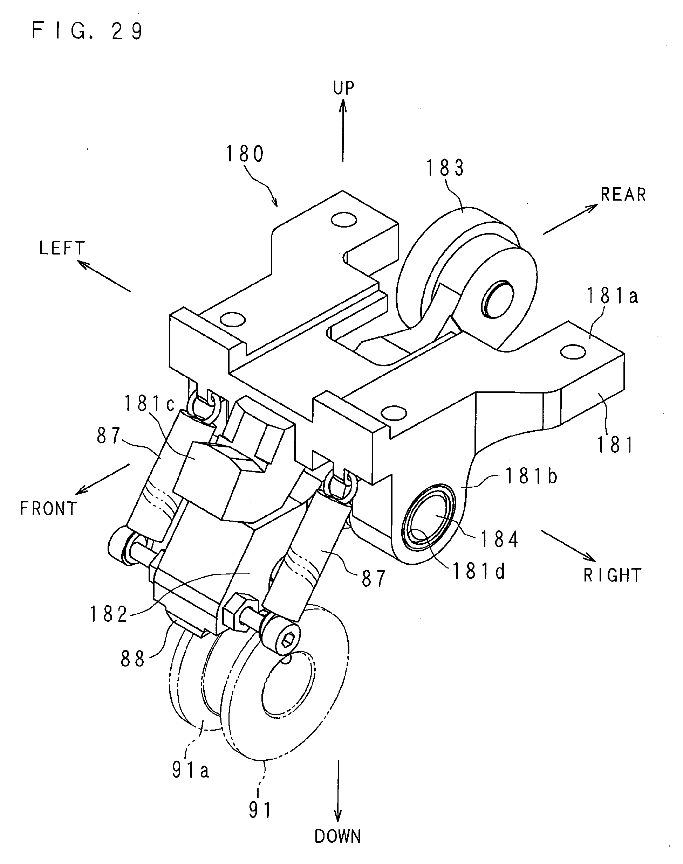

As shown in FIGS. 28 to 33, in this changed embodiment, the front end section of a rotation rod 182 is fitted into a fitting section provided in the central section of an arm shaft 177, thereby positioning a grip arm 170 in the axial direction of the arm shaft 177, in the up-down direction, and in the front-rear direction.

In the changed embodiment, changes have been made for the grip arm 170 and a positioning mechanism 180 (positioning section) as described below. Components other than those described below are similar to those of the above-mentioned embodiment, and their descriptions are omitted.

The grip arm 170 is equipped with mounting sections 173 that are installed on the moving carriage 43. A support rod 174 is connected to the mounting sections 173. The support rod 174 protrudes downward from the mounting sections 173. The support rod 174 has a positioning pin 174a. The positioning pin 174a makes contact with a pin receiving section 181c of the positioning mechanism 180. The positioning pin 174a protrudes rearward from the support rod 174.

Both side faces of the lower end section of the support rod 174 respectively secure the guide plates 75 and 75. The guide plates 75 are used to guide the rocking of an arm section 176. The guide plates 75 are opposed to each other. The guide plate 75 has a holding fan shape expanding downward from the upper end section thereof used as a base point in side view. The upper end section of the guide plate 75 has an arm shaft hole 75a into which the arm shaft 177 is inserted. The positioning pin 174a passes through the support rod 174 in a direction orthogonal to the axial direction of the arm shaft hole 75a and in a direction orthogonal to the up-down direction and protrudes from the support rod 174.

The upper section of the arm section 176 is located between the two guide plates 75. The arm section 176 extends in the up-down direction and has a bent shape. The arm shaft 177 is inserted into the upper end section of the arm section 176. Both end sections of the arm shaft 177 protrude from both sides of the upper end section of the arm section 176. Both end sections of the arm shaft 177 are rotatably inserted into the arm shaft holes 75a and 75a of the guide plates 75 and 75. A ring-shaped fitting section 91 is provided at the central section of the arm shaft 177 and outside the arm shaft 177. The fitting section 91 has a groove 91a around the whole circumference of the outer face thereof. The groove 91a has tapered side faces, and the width of the groove 91a on the outside in the radial direction is wider than that on the inside. The upper end section of the arm section 176 has connection sections 176b and 176b. The connection sections 176b and 176b are separated from each other in the axial direction of the arm shaft 177. The fitting section 91 is fitted between the connection sections 176b and 176b.

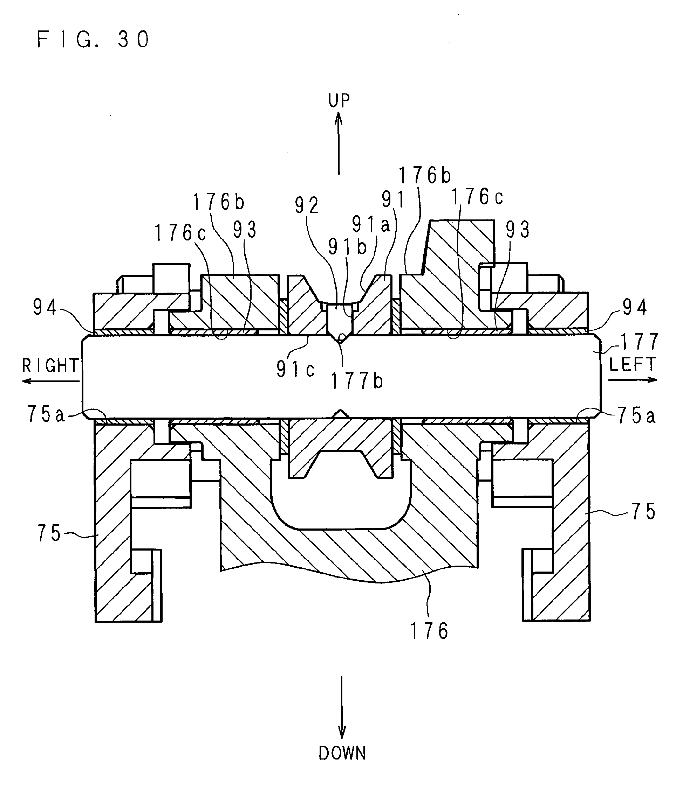

As shown in FIG. 30, a screw 92 passes through the fitting section 91 from the bottom section of the groove 91a in the radial direction. The end section of the screw 92 is engaged with a groove 177b provided at the central section of the arm shaft 177. The screw 92 secures the fitting section 91 to the arm shaft 177. Spacers having small surface friction are provided between the connection sections 176b and 176b and the fitting section 91. The spacers are used to reduce the rotational friction of the arm shaft 177.

Cylindrical bushings 93 and 93 are provided between the outer circumference of the arm shaft 177 and the shaft holes 176c and 176c of the connection sections 176b and 176b. Cylindrical bushings 94 and 94 are provided between the outer circumference of the arm shaft 177 and the arm shaft holes 75a and 75a of the guide plates 75 and 75. The surfaces of the cylindrical bushings 93 and 94 have a solid lubricant film so that the frictional coefficient thereof becomes small. When the arm shaft 177 relatively rotates with respect to the arm section 176 and the guide plates 75 and 75, the rotational friction therebetween is small.

The positioning mechanism 180 is equipped with a base 181 secured to the lower end section of the rail base 41b. The base 181 is equipped with a mounting plate 181a, extension sections 181b, and the pin receiving section 181c. The mounting plate 181a has a rectangular upper face. The lower end section of the rail base 41b is secured to the upper face of the mounting plate 181a. The extension sections 181b and 181b extend downward respectively from both front side sections of the mounting plate 181a. The extension sections 181b and 181b have a block shape and are opposed to each other. Positioning shaft holes 181d and 181d pass through the extension sections 181b and 181b. The axial centers of the positioning shaft holes 181d and 181d are coincident with each other. The rotation rod 182 is provided between the extension sections 181b and 181b so as to intersect the axial centers of the positioning shaft holes 181d and 181d. The rotation rod 182 is inclined with its front side directed downward. The configuration of the pin receiving section 181c is similar to that in the above-mentioned embodiment.

A rotation shaft 184 being nearly orthogonal to the rotation rod 182 is provided at a nearly central section of the rotation rod 182. The rotation shaft 184 is rotatably inserted into the two positioning shaft holes 181d and 181d. A positioning cam follower 183 is provided at the rear end section of the rotation rod 182. The positioning cam follower 183 is a cylindrical roller that is rotatable around an axis in parallel with the rotation shaft 184. A protrusion section 88 protruding downward is provided at the front end section of the rotation rod 182. The protrusion section 88 has a tapered shape, that is, the dimension thereof in a direction parallel with the axial direction of the arm shaft 177 becomes smaller toward its lower end. The taper angle of the protrusion section 88 is nearly equal to the taper angle of the side faces of the groove 91a. The springs 87 and 87 bias the protrusion section 88 clockwise around the rotation shaft 184 in right side view.

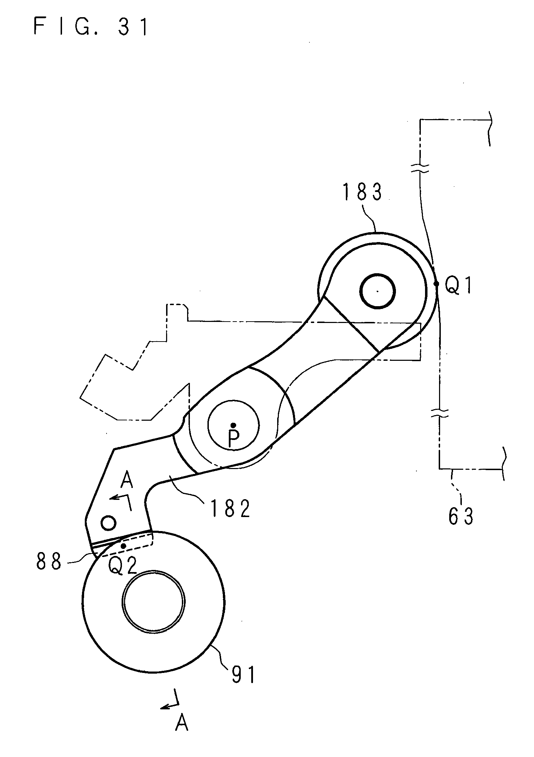

As shown in FIG. 31, the positioning cam follower 183 moves on the positioning cam 63 as the spindle head 32 moves in the up-down direction. The positioning cam follower 183 moves in the front-rear direction along the face of the positioning cam 63. The rotation rod 182 rotates around its fulcrum P used as the center of the rotation shaft 184. The positioning cam follower 183 moves forward along the face of the positioning cam 63. The rotation rod 182 rotates counterclockwise around the fulcrum P as shown in FIG. 31 and the protrusion section 88 gets close to the fitting section 91.

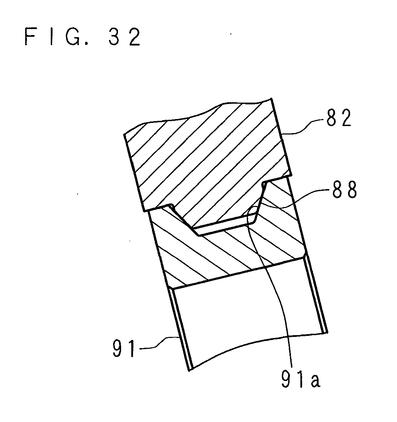

As shown in FIG. 32, the protrusion section 88 engages with the groove 91a. The protrusion section 88 positions the arm shaft 177 in the axial direction, thereby positioning the arm section 176 of the grip arm 170. The protrusion section 88 presses the groove 91a, and the positioning pin 174a makes contact with the pin receiving section 181c. The positioning pin 174a positions the grip arm 170 in the up-down direction and the front-rear direction.

The fitting section 91 and the arm shaft 177 displace the direction of the force exerted from the protrusion section 88 to the groove 91a from the axial center of the arm shaft 177. Hence, the force rotates the fitting section 91 and the arm shaft 177 by a very small angle around the axis of the arm shaft 177. Each time the protrusion section 88 engages with the groove 91a, this rotation changes the contact position therebetween in the circumferential direction of the groove 91a. As a result, the durability of the fitting section 91 is improved.

As shown in FIG. 31, the position in which the positioning cam follower 183 makes contact with the positioning cam 63 is referred to as Q1, and the position at which the protrusion section 88 of the rotation rod 182 makes contact with the groove 91a of the fitting section 91 is referred to as Q2. The fulcrum P is the rotation center of the rotation rod 182. The dimension between P and Q1 is longer than that between P and Q2. The force exerted from the positioning cam 63 to the rotation rod 182 is amplified by the principle of leverage, and the force exerted from the protrusion section 88 to press the fitting section 91 downward becomes large.

The positioning pieces 86 and 86 according to the above-mentioned embodiment position the grip arm 70 by holding both end sections of the arm shaft 77 therebetween. The positioning pieces 86 and 86 are required to retract to a position in which the arm shaft 77 does not overlap with the guide plates 75 and 75 as viewed from the axial direction of the arm shaft 77. If the positioning pieces 86 and 86 do not retract, the arm shaft 77 makes contact with the guide plates 75 and 75 when the tool magazine 40 rotates. In the above-mentioned embodiment, the rotation rod 82 is required to rotate around the fulcrum P by a large angle.

In the changed embodiment, when the tool magazine 40 rotates, the protrusion section 88 does not overlap with the fitting section 91 as viewed from the axial direction of the arm shaft 177. Since the protrusion section 88 engages with the groove 91a of the fitting section 91 that is fitted on the outside of the arm shaft 177, the rotation angle of the rotation rod 182 is smaller than that in the above-mentioned embodiment. Hence, the dimension between P and Q1 can be made longer than that between P and Q2.

In another example, it may be possible that a flange-shaped protrusion is provided around the outer circumference of the fitting section 91 and that a groove to be fitted on the protrusion is provided at the front end section of the rotation rod 182.

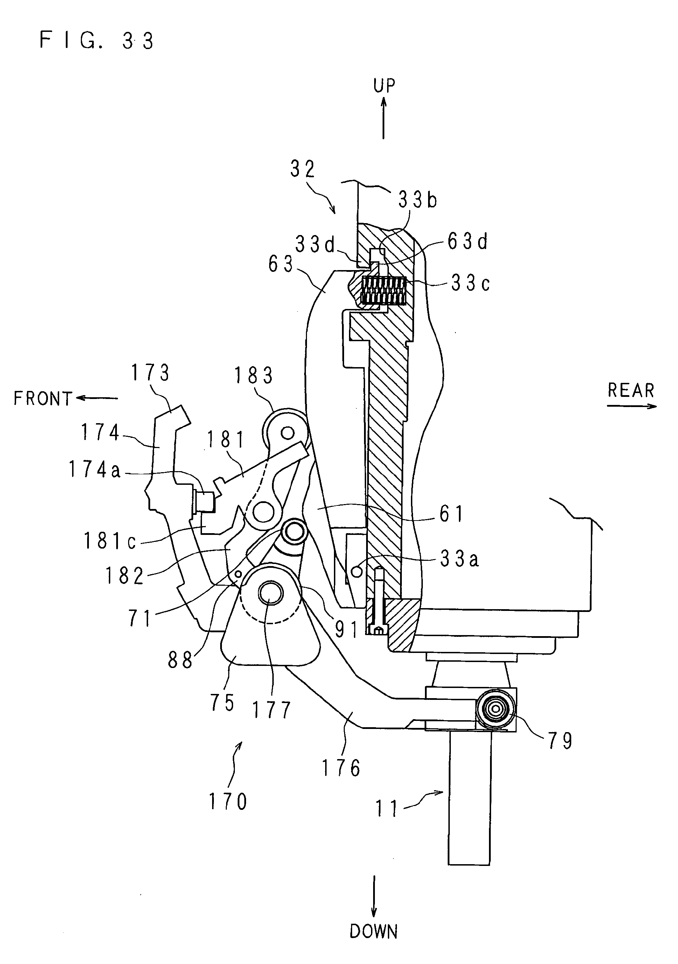

As shown in FIG. 33, the lower end section of the positioning cam 63 is rotatably supported by a shaft member 33a, the axial direction of which is the left-right direction. An elastic member 33c (biasing member) biases the upper end section of the positioning cam 63 forward. The elastic member 33c is a compression spring, for example. The elastic member 33c is provided in a concave section 33b provided in the spindle head 32. The elastic member 33c is compressed in the front-rear direction and placed on the rear face of the upper end section of the positioning cam 63. The upper end section of the positioning cam 63 has a flange-shaped engagement piece 63d. The engagement piece 63d is disposed in the concave section 33b and can move within the distance of the depth of the concave section 33b in the front-rear direction. An engaged section 33d is provided at the opening fringe of the concave section 33d. The engagement piece 63d makes contact with the engaged section 33d from behind. When the positioning cam 63 receives a load from the front side to the rear side, the elastic member 33c becomes shortened rearward. When the load is released, the positioning cam 63 floats forward and then stops at the position in which the engagement piece 63d makes contact with the engaged section 33d.

If foreign object, such as chips, attaches to the contact faces of the positioning cam 63 and the positioning cam follower 183, an excessive force is exerted to the arm shaft 177. This force can be absorbed because the positioning cam 63 is elastically pushed rearward.

It may be possible that the shaft member 33a is located on the side of the upper end section of the positioning cam 63 and that the elastic member 33c is located on the side of the lower end section of the positioning cam 63.

When the positioning cam 63 pushes the positioning cam follower 183 forward, the protrusion section 88 on the front end side of the rotation rod 182 is engaged with the fitting section 91 and presses the grip arm 170 rearward and obliquely downward. At the same time, the approaching cam 61 exerts a force for pushing the first cam follower 71 forward to the grip arm 170. When the force exerted forward from the approaching cam 61 is larger than the rear direction component of the force exerted rearward and obliquely downward from the fitting section 91, the grip arm 170 moves forward and its position deviates.

The force exerted rearward and obliquely downward from the fitting section 91 to the grip arm 170 is generated by the force exerted when the positioning cam 63 pushes the positioning cam follower 183 forward. If the force exerted forward from the approaching cam 61 to the grip arm 170 is larger than the force exerted forward from the elastic member 33c to the positioning cam 63, the rotation rod 182 rotates, and the grip arm 170 moves forward and its position deviates.

More specifically, the force exerted when the positioning cam 63 pushes the positioning cam follower 183 forward is determined by the dimension between the fulcrum 33a and the position in which the positioning cam 63 makes contact with the positioning cam follower 83, the dimension between the fulcrum 33a and the action point of the force biased by the elastic member 33c, and the force biased by the elastic member 33c.

According to the principle of leverage, the smaller the dimension between the fulcrum 33a and the position in which the positioning cam 63 makes contact with the positioning cam follower 183, the larger the force exerted when the positioning cam 63 pushes the positioning cam follower 183 forward. For this reason, the force exerted when the positioning cam 63 pushes the positioning cam follower 183 forward becomes larger than the force exerted forward from the approaching cam 61 to the grip arm 70, whereby the positional deviation of the grip arm 170 hardly occurs.

As shown in FIG. 33, the dimension between the fulcrum 33a and the position in which the positioning cam 63 makes contact with the positioning cam follower 183 is approximately half of the dimension between the fulcrum 33a and the action point of the force biased by the elastic member 33c.

The force exerted when the positioning cam 63 pushes the positioning cam follower 183 forward is approximately two times the force biased by the elastic member 33c. Unless a force equal to or more than two times the biased force is exerted to the grip arm 170, the positional deviation of the grip arm 170 does not occur.

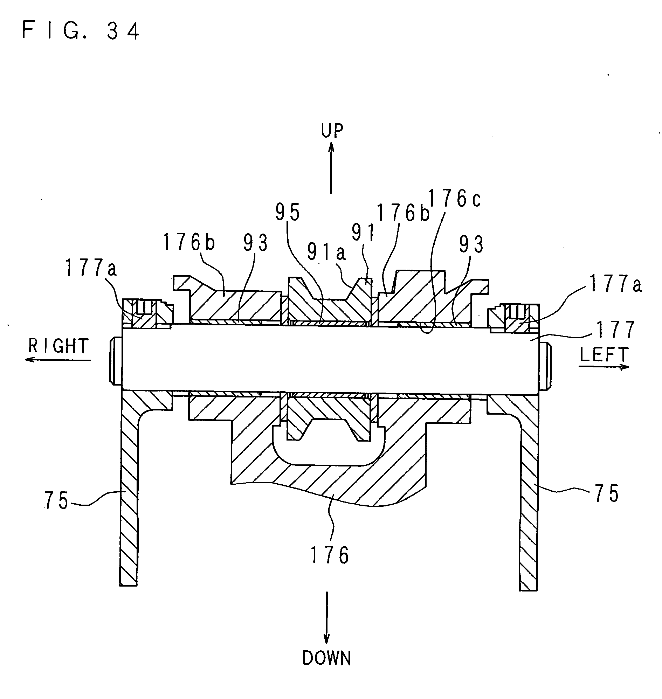

As shown in FIG. 34, the arm shaft 177 may be secured to the guide plates 75 and 75 using screws 177a and 177a. The screw 177a passes through the upper section of the guide plate 75. In the case described above, a cylindrical bushing 95 is inserted between the fitting section 91 and the arm shaft 177 so that the fitting section 91 can rotate around the arm shaft 177.

## Claims

1. A machine tool (100) comprising a plurality of grip arms (70, 170) that grip tools and rotate around shafts (77, 177); a conveying section (10) for conveying the grip arms (70, 170) to an exchange position in which tool exchange is performed; and a machining section (32), in which the tool gripped by the grip arm (70, 170) is mounted, for machining work, wherein the machining section (32) is adapted to move between a machining position in which work is machined and a conveying position in which the grip arm (70, 170) can be conveyed,
**characterised in that** it further comprises a cam (63) that is adapted to move in the same direction as that of the machining section (32) in accordance with the movement of the machining section (32);and
a rotation rod (82, 182) that is adapted to rotate around a rotation shaft (84, 184), wherein
the rotation rod (82, 182) has a cam follower (83, 183) making contact with the cam (63) at one end thereof and has a positioning section (80, 180) for positioning the grip arm (70, 170) in the axial direction of the shaft (77, 177) at the other end thereof

2. The machine tool (100) according to claim 1, wherein
the grip arm (170) has a fitting section (91) into which the positioning section (180) is fitted by the rotation of the rotation rod (182).

3. The machine tool (100) according to claim 2, wherein
the fitting section (91) has a ring-shaped section having a groove (91a) around the outer surface thereof on the outside of the shaft, and
the positioning section (180) has a protrusion (88) to engage with the groove (91a).

4. The machine tool (100) according to claim 2, wherein
the fitting section (91) has a ring-shaped section having a protrusion around the outer surface thereof on the outside of the shaft (77, 177), and
the positioning section (180) has a groove to be engaged by the protrusion.

5. The machine tool (100) according to claims 2 to 4, wherein
the dimension between a rotation center of the rotation rod (182)and the position (Q1) in which the cam follower (183) makes contact with the cam (63) is longer than the dimension between the rotation center of the rotation rod(182) and the position at which the other end section makes contact with the fitting section (91).

6. The machine tool (100) according to claims 1 to 5, further comprising a biasing member (33c) for biasing the cam (63) in a direction intersecting the cam face.

7. The machine tool (100) according to claim 1, wherein
the positioning section (180) is formed of axial positioning sections (86) opposed to both end sections of the shaft(77).

8. The machine tool (100) according to claim 7, wherein
tapers (77a) are formed at both end sections of the shaft (77), and
the axial positioning sections (86) have inclined faces (86a) adapted to the tapers (77a).

9. The machine tool (100) according to claims 1 to 8, wherein
a second positioning section (74a, 174a) for positioning the grip arm (70, 170) in a direction intersecting the axial direction of the shaft (77, 177) is provided in the grip arm (70, 170), and
a contacted section (81c, 181c) with which the second positioning section (74a, 174a) makes contact is provided.

10. The machine tool (100) according to claim 9, wherein
one end section of the grip arm (70, 170) grips a tool, and
the second positioning section (74a, 174a) protrudes in one direction orthogonal to the axial direction of the shaft (77, 177) from the other end section of the grip arm (70, 170) and makes contact with the contacted section (81c, 181c) in two directions orthogonal to the axial direction of the shaft (77, 177).

11. The machine tool (100) according to claims 1 to 10, further comprising an approaching cam (61) and a separating cam (62), the cams being **characterized in that** in accordance with the movement of the machining section (32), the cams move in the same direction as that of the machining section (32), that the grip arm (70, 170) makes contact with the approaching cam (61) and gets close to the machining section (32), and that the grip arm (70, 170) makes contact with the separating cam (62) and moves away from the machining section (32), wherein
when the machining section (32) moves from the machining position to the conveying position, after the positioning of the grip arm (70, 170), the grip arm (70, 170) makes contact with the approaching cam (61) and grips the tool mounted in the machining section (32), and
when the machining section (32) moves from the conveying position to the machining position, after the positioning of the grip arm (70, 170), the grip arm (70, 170) mounts the tool in the machining section (32), makes contact with the separating cam (62) and moves away from the tool.

## Patentansprüche

1. Bearbeitungswerkzeug (100) mit vielen Greifarmen (70, 170), die Werkzeuge greifen und sich um Wellen (77, 177) drehen; einem Vorschubbereich (10) zum Vorschieben der Greifarme (70, 170) zu einer Austauschposition, an der ein Werkzeugaustausch durchgeführt wird; und einem Bearbeitungsbereich (32), in dem das durch den Greifarm (70, 170) gegriffene Werkzeug angebracht ist, um ein Werkstück zu bearbeiten, wobei der Bearbeitungsbereich (32) daran angepasst ist, sich zwischen einer Bearbeitungsposition, an die das Werkstück bearbeitet wird, und einer Vorschubposition zu bewegen, an der der Greifarm (70, 170) vorgeschoben werden kann,
**dadurch gekennzeichnet, dass** es des Weiteren einen Nocken (63) aufweist, der daran angepasst ist, sich in derselben Richtung wie der Bearbeitungsbereich (32) gemäß der Bewegung des Bearbeitungsbereiches (32) zu bewegen; und
einen Drehstab (82, 182), der daran angepasst ist, sich um eine Drehwelle (84, 184) zu drehen, wobei
der Drehstab (82, 182) einen Nockenmitnehmer (83, 183) hat, der an einem seiner Enden mit dem Nocken (63) in Kontakt gelangt und einen Positionierbereich (80, 180) zum Positionieren des Greifarmes (70, 170) in der axialen Richtung der Welle (77, 177) an seinem anderen Ende hat.

2. Bearbeitungswerkzeug (100) gemäß Anspruch 1, wobei
der Greifarm (170) einen Anbringungsbereich (91) hat, in den der Positionierbereich (180) durch die Drehung des Drehstabs (182) angebracht wird.

3. Bearbeitungswerkzeug (100) gemäß Anspruch 2, wobei
der Anbringungsbereich (91) einen ringförmigen Bereich hat, der eine Nut (91a) um seiner äußeren Fläche an der Außenseite der Welle hat, und
der Positionierbereich (180) einen Vorsprung (88) für einen Eingriff mit der Nut (91a) hat.

4. Bearbeitungswerkzeug (100) gemäß Anspruch 2, wobei
der Anbringungsbereich (91) einen ringförmigen Bereich hat, der um seiner äußeren Fläche an der Außenseite der Welle (77, 177) einen Vorsprung hat, und
der Positionierbereich (180) eine Nut für einen Eingriff mit dem Vorsprung hat.

5. Bearbeitungswerkzeug (100) gemäß Ansprüchen 2 bis 4, wobei
das Maß zwischen einer Drehmitte des Drehstabs (182) und der Position (U1), an der der Nockenmitnehmer (183) mit dem Nocken (63) in Kontakt gelangt, größer ist als das Maß zwischen der Drehmitte des Drehstabs (182) und der Position, an der der andere Endbereich mit dem Anbringungsbereich (91) in Kontakt gelangt.

6. Bearbeitungswerkzeug (100) gemäß Ansprüchen 1 bis 5, des Weiteren mit einem Vorspannelement (33c) zum Vorspannen des Nockens (63) in einer Richtung, die die Nockenseite schneidet.

7. Bearbeitungswerkzeug (100) gemäß Anspruch 1, wobei
der Positionierbereich (180) aus axialen Positionierbereichen (86) gebildet ist, die beiden Endbereichen der Welle (77) gegenüberliegen.

8. Bearbeitungswerkzeug (100) gemäß Anspruch 7, wobei
Schrägen (77a) an beiden Endbereichen der Welle (77) ausgebildet sind, und
die axialen Positionierbereiche (86) geneigte Seiten (86a) haben, die an die Schrägen (77a) angepasst sind.

9. Bearbeitungswerkzeug (100) gemäß Ansprüchen 1 bis 8, wobei
ein zweiter Positionierbereich (741a, 174a) zum Positionieren des Greifarms (70, 170) in einer Richtung, die die axiale Richtung der Welle (77, 177) schneidet, in dem Greifarm (70, 170) vorgesehen ist, und
ein Kontaktbereich (81c, 181c) vorgesehen ist, mit dem der zweite Positionierbereich (74a, 174a) in Kontakt gelangt.

10. Bearbeitungswerkzeug (100) gemäß Anspruch 9, wobei
ein Endbereich des Greifarms (70, 170) ein Werkzeug greift, und
der zweite Positionierbereich (74a, 174a) in einer Richtung, die orthogonal zu der axialen Richtung der Welle (77, 177) ist, von dem anderen Endbereich des Greifarms (70, 170) vorsteht und mit dem Kontaktbereich (81c, 181c) in zwei Richtungen in Kontakt gelangt, die orthogonal zu der axialen Richtung der Welle (77, 177) sind.

11. Bearbeitungswerkzeug (100) gemäß Ansprüchen 1 bis 10, des Weiteren mit einem Annäherungsnocken (61) und einem Trennnocken (62), wobei die Nocken **dadurch gekennzeichnet sind, dass** sich die Nocken gemäß der Bewegung des Bearbeitungsbereiches (32) in derselben Richtung wie der Bearbeitungsbereich (32) bewegen, dass der Greifarm (70, 170) mit dem Annäherungsnocken (61) in Kontakt gelangt und nahe dem Bearbeitungsbereich (32) gelangt, und dass der Greifarm (70, 170) mit dem Trennnocken (62) in Kontakt gelangt und sich von dem Bearbeitungsbereich (32) weg bewegt, wobei
wenn sich der Bearbeitungsbereich (32) von der Bearbeitungsposition zu der Vorschubposition bewegt, der Greifarm (70, 170) nach dem Positionieren des Greifarms (70, 170) mit dem Annäherungsnocken (61) in Kontakt gelangt und das in dem Bearbeitungsbereich (32) angebrachte Werkzeug greift, und
wenn sich der Bearbeitungsbereich (32) von der Vorschubposition zu der Bearbeitungsposition bewegt, der Greifarm (70, 170) das Werkzeug in dem Bearbeitungsbereich (32) anbringt, mit dem Trennnocken 62) in Kontakt gelangt und sich von dem Werkzeug weg bewegt, nachdem der Greifarm (70, 170) positioniert wurde.

## Revendications

1. Machine-outil (100) comprenant une pluralité de bras de préhension (70, 170) qui saisissent les outils et tournent autour d'arbres (77, 177) ; une section de transport (10) pour acheminer les bras de préhension (70, 170) vers une position d'échange dans laquelle l'échange d'outils est réalisé ; et une section d'usinage (32) dans laquelle l'outil saisi par le bras de préhension (70, 170) est monté pour un travail d'usinage, dans laquelle la section d'usinage (32) est conçue pour se déplacer entre une position d'usinage dans laquelle l'ouvrage est usiné et une position de transport dans laquelle le bras de préhension (70, 170) peut être acheminé, **caractérisée en ce qu'**elle comprend en outre une came (63) qui est conçue pour se déplacer dans la même direction que celle de la section d'usinage (32) en fonction du mouvement de la section d'usinage (32) ; et
une tige de rotation (82, 182) qui est conçue pour tourner autour d'un arbre de rotation (84, 184), dans laquelle
la tige de rotation (82, 182) présente un galet suiveur (83, 183) en contact avec la came (63) à une de ses extrémités et présente une section de positionnement (80, 180) à son autre extrémité pour positionner le bras de préhension (70, 170) dans la direction axiale de l'arbre (77, 177).

2. Machine-outil (100) selon la revendication 1, dans laquelle
le bras de préhension (170) présente une section d'ajustement (91) dans laquelle la section de positionnement (180) est ajustée par la rotation de la tige de rotation (182).

3. Machine-outil (100) selon la revendication 2, dans laquelle
la section d'ajustement (91) présente une section annulaire ayant une gorge (91a) autour de sa surface externe, sur l'extérieur de l'arbre, et
la section de positionnement (180) présente une saillie (88) destinée à se mettre en prise avec la gorge (91a).

4. Machine-outil (100) selon la revendication 2, dans laquelle
la section d'ajustement (91) présente une section annulaire ayant une saillie autour de sa surface externe, sur l'extérieur de l'arbre (77, 177) et
la section de positionnement (180) présente une gorge destinée à se mettre en prise avec la saillie.

5. Machine-outil (100) selon les revendications 2 à 4, dans laquelle
la dimension entre un centre de rotation de la tige de rotation (182) et la position (Q1) dans laquelle le galet suiveur (183) entre en contact avec la came (63), est plus longue que la dimension entre le centre de rotation de la tige de rotation (182) et la position au niveau de laquelle l'autre section d'extrémité entre en contact avec la section d'ajustement (91).

6. Machine-outil (100) selon les revendications 1 à 5, comprenant en outre un élément de sollicitation (33c) pour amener la came (63) dans une direction croisant la face de la came.

7. Machine-outil (100) selon la revendication 1, dans laquelle
la section de positionnement (180) est formée de sections de positionnement axiales (86) opposées aux deux sections d'extrémité de l'arbre (77).

8. Machine-outil (100) selon la revendication 7, dans laquelle
des cônes (77a) sont formés au niveau des deux sections d'extrémité de l'arbre (77), et
les sections de positionnement axiales (86) ont des faces inclinées (86a) adaptées aux cônes (77a).

9. Machine-outil (100) selon les revendications 1 à 8, dans laquelle
une seconde section de positionnement (74a, 174a) conçue pour positionner le bras de préhension (70, 170) dans une direction croisant la direction axiale de l'arbre (77, 177) est prévue dans le bras de préhension (70, 170), et
une section de contact (81c, 181c), avec laquelle la seconde section de positionnement (74a, 174a) entre en contact, est prévue.

10. Machine-outil (100) selon la revendication 9, dans laquelle
une section d'extrémité du bras de préhension (70, 170) saisit un outil, et
la seconde section de positionnement (74a, 174a) fait saillie dans une direction orthogonale à la direction axiale de l'arbre (77, 177) par rapport à l'autre section d'extrémité du bras de préhension (70, 170) et entre en contact avec la section de contact (81c, 180c) dans deux directions orthogonales à la direction axiale de l'arbre (77, 177).

11. Machine-outil (100) selon les revendications 1 à 10, comprenant en outre une came d'approche (61) et une came de séparation (62), les cames étant **caractérisées en ce que**, en fonction du mouvement de la section d'usinage (32), les cames se déplacent dans la même direction que celle de la section d'usinage (32), **en ce que** le bras de préhension (70, 170) entre en contact avec la came d'approche (61) et se place près de la section d'usinage (32), et **en ce que** le bras de préhension (70, 170) entre en contact avec la came de séparation (62) et s'écarte de la section d'usinage (32), dans laquelle
lorsque la section d'usinage (32) se déplace de la position d'usinage vers la position de transport, après le positionnement du bras de préhension (70, 170), le bras de préhension (70, 170) entre en contact avec la came d'approche (61) et saisit l'outil monté dans la section d'usinage (32) et
lorsque la section d'usinage (32) se déplace de la position de transport vers la position d'usinage, après le positionnement du bras de préhension (70, 170), le bras de préhension (70, 170) monte l'outil dans la section d'usinage (32), entre en contact avec la came de séparation (62) et s'écarte de l'outil.
